# EUROPEAN PATENT SPECIFICATION

(11) **EP 4 481 237 B1**
(45) Date of publication and mention of the grant of the patent: **26.11.2025**
(21) Application number: 23180561.5
(22) Date of filing: 21.06.2023
(51) Int. Cl.: F16H 57/04, B64C 27/12, F16C 33/66

(54) **TRANSMISSION ASSEMBLY FOR AN AIRCRAFT**
GETRIEBEEINHEIT FÜR EIN FLUGZEUG
ENSEMBLE DE TRANSMISSION POUR UN AVION

(43) Date of publication of application: 25.12.2024
(60) Divisional application: 24183061.1
(73) Proprietor: Leonardo S.p.a., 00195 Roma (IT)
(72) Inventor: SARTORI, Sergio, 21017 Samarate (VA) (IT); SERAFINI, Stella, 21017 Samarate (VA) (IT); PAVARIN, Luca, 21017 Samarate (VA) (IT); PISANI, Paolo, 21017 Samarate (VA) (IT); FORNI, Massimo, 21017 Samarate (VA) (IT); BORLIN, Nicola, 21017 Samarate (VA) (IT)
(74) Representative: Studio Torta S.p.A.

(56) References cited:
- WO-A1-2023/043466
- US-A- 2 742 332
- US-A1- 2021 116 016
- US-B2- 11 415 174

## Description

The present invention concerns a transmission assembly for an aircraft.

The present invention concerns in particular a transmission assembly for an aircraft capable of hovering, for example a helicopter or a convertiplane.

Helicopters are known essentially comprising a fuselage, a main rotor located at the top of the fuselage and revolving about its own axis, and an auxiliary rotor arranged at a tail end of the fuselage.

Said aircraft further comprise, in a known manner, one or more motor members, for example turbines, and a transmission assembly interposed between the turbines and the main rotor and adapted to transmit the motion from the turbines to the main rotor. The aircraft can also comprise further transmission assemblies, which are adapted to transmit the motion from the turbines to a plurality of accessory devices adapted, for example, to supply the energy required for operation of the on-board equipment.

During operation of the aircraft, it is fundamental to ensure correct lubrication of the transmission assembly, since inadequate lubrication conditions could pose a risk for the entire aircraft. For said purpose, the aircraft comprise a circuit for overall lubrication of the transmission assembly.

Nevertheless, some critical components of the transmission assembly tend to reach particularly high temperatures during operation and the lubrication circuit of the transmission assembly of the known aircraft is not always suitable to ensure the lubrication of said critical components and therefore limit the temperatures reached locally.

The need is therefore felt in the sector to ensure lubrication of the critical components of the transmission assembly.

The object of the present invention is to provide a transmission assembly for an aircraft, which meets the above-mentioned need in a simple and inexpensive manner.

US-A1-2021/116016 discloses a lubrication system including a primary lubrication system for a gearbox of the aircraft. The primary lubrication system comprises a first lubricant tank, and an emergency lubrication system for the gearbox. The emergency lubrication system includes a second lubricant tank coupled to a gearbox of an aircraft, a passive thermostat coupled between the second lubricant tank and the gearbox via a lubricant line, a conductor coupled between the passive thermostat and the gearbox and configured to conduct heat from the gearbox to the passive thermostat, and wherein the passive thermostat is configured to open in response to the conductor being exposed to a temperature that exceeds a threshold temperature.

US-B2-11415174 discloses embodiments directed to solid lubricant assemblies for providing over temperature protection for bearings and gears in rotorcraft systems. A solid lubricant enters a fluid state above a certain temperature and is positioned so that fluid lubricant is applied to the bearings or gears.

US-A1-2742332 discloses an assembly comprising a member to be lubricated for transmission of the motion and a tank adapted to contain a lubricating fluid. The tank contains a lubricantfilled capsule and a temperature responsive piercing unit. Such document discloses then a shutter housed inside said first tank;said shutter comprising a first main body slidable between a first position in which, in use, it determines the obstruction of a first opening and a second position in which, in use, it determines the unblocking of said first opening and a meltable element adapted to be, in use, in the solid state below a threshold value and being adapted to melt at least partly and/or deform at said threshold value;said meltable element being adapted to maintain, in use, said first main body in said first position, when it is in the solid state, and being adapted to determine, in use, the sliding of said first main body towards said second position, when it is at least partly melted.

WO2023/043466 discloses an oil distribution system including a shaft assembly, a bearing assembly and a mounting assembly.

The shaft assembly includes a shaft with an inner shaft. A pocket is defined between the shaft and the inner shaft. A ringed lattice containing oil is secured within the pocket, melting of the ringed lattice releases the oil. The shaft includes shaft slots to usher oil from the pocket towards the bearing assembly. The bearing assembly includes an inner and outer race. The inner and outer race each include axial slots and radial slots. The axial slots of the inner race align with the shaft slots to allow oil to flood the inner race. The mounting assembly includes a bearing support having bearing support slots to receive a stringed lattice. Oil from the bearing support flows into the outer race when the axial slots of the outer race align with the bearing support slots.

The above-mentioned object is achieved by the present invention, which concerns a transmission assembly as defined in claim 1.

For a better understanding of the present invention, nine preferred embodiments are described below, purely by way of non-limiting example and with reference to the attached drawings, in which:
- Figure 1 is a perspective view of a helicopter comprising a transmission assembly according to a first embodiment of the present invention;
- Figure 2 is a perspective view of the transmission assembly of Figure 1;
- Figure 3 is a view in section and on an enlarged scale along the plane III-III in Figure 2;
- Figures 4 and 5 are detail views of the section illustrated in Figure 3, which illustrate the transmission assembly in respective different operating positions;
- Figure 6 is an exploded view of a component of the transmission assembly of Figures 1 to 5 on a further enlarged scale;
- Figure 7 is a perspective view of a portion of a transmission assembly according to a second embodiment, which is not part of the invention and is shown only for illustrative purposes;
- Figures 8 and 9 are perspective cutaway view which illustrate the transmission assembly of Figure 7 on an enlarged scale and in respective different operating positions;
- Figures 10 and 11 are section views of a portion of a transmission assembly according to a third embodiment, which is not part of the invention and is shown only for illustrative purposes in respective different operating positions;
- Figures 12 and 13 are section views of a portion of a transmission assembly according to a fourth embodiment, which is not part of the invention and is shown only for illustrative purposes in respective different operating positions;
- Figures 14 and 15 are section views of a portion of a transmission assembly according to a fifth embodiment, which is not part of the invention and is shown only for illustrative purposes in respective different operating positions;
- Figures 16 and 17 are section views of a portion of a transmission assembly according to a sixth embodiment, which is not part of the invention and is shown only for illustrative purposes in respective different operating positions;
- Figures 18 and 19 are section views of a portion of a transmission assembly according to a seventh embodiment of the present invention in respective different operating positions;
- Figures 20 and 21 are detail views of the transmission assembly according to the seventh embodiment, in the operating positions of Figures 18 and 19 respectively;
- Figures 22 and 23 are section views of a portion of a transmission assembly according to an eighth embodiment of the present invention in respective different operating positions; and
- Figures 24 and 25 are section views of a portion of a transmission assembly according to a ninth embodiment of the present invention in respective different operating positions.

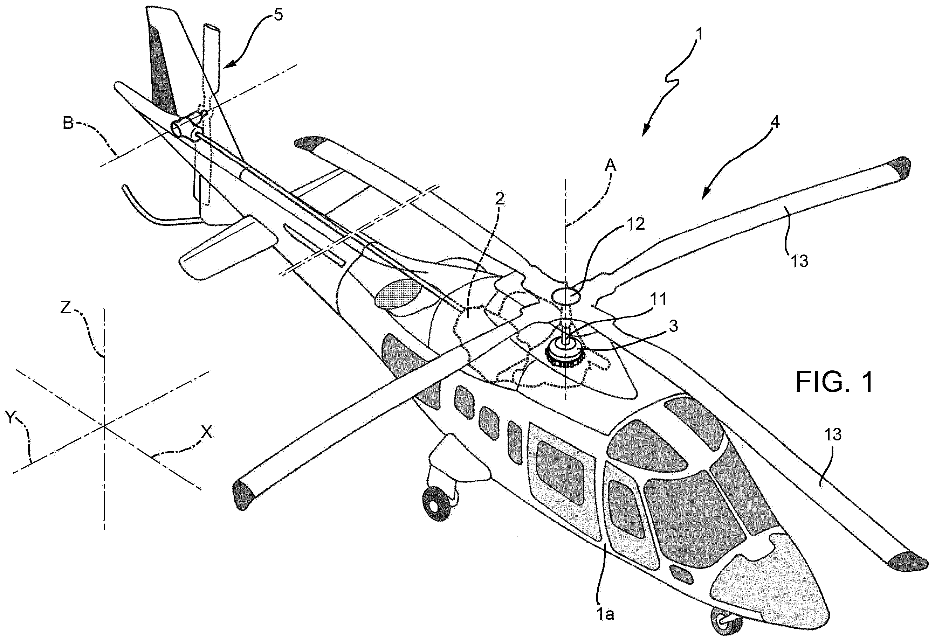

With reference to Figure 1, the number 1 indicates an aircraft capable of hovering. In the non-limiting embodiment shown, the aircraft is a helicopter.

In the following part of the present description, the expressions "front", "rear", "upper" and "lower" are used with reference to a normal advanced direction of flight and operating position of the aircraft 1 illustrated in the attached figures. It is also possible to define a reference system integral with the aircraft 1 and comprising (Figure 1):
- a longitudinal axis X;
- a transverse axis Y, which is orthogonal to the axis X; and
- an axis Z orthogonal to the axes X and Y and directed vertically to the ground during a normal condition of use of the aircraft 1.

The aircraft 1 comprises:
- a fuselage 1a;
- one or more turbines 2;
- a main rotor 4 located at the top of the fuselage 2 and rotatable about an axis A; and
- an auxiliary rotor 5 located at a tail end of the fuselage 2 and rotatable about its own axis B transverse to the axis A.

In further detail, the rotor 4 essentially comprises:
- a drive shaft 11 rotatable about the axis A;
- a hub 12 driven in rotation by the drive shaft 11; and
- a plurality of blades 13 articulated on the hub 12.

The helicopter 1 further comprises a transmission assembly 3, which transmits the motion from the turbines 2 to the main rotor 4.

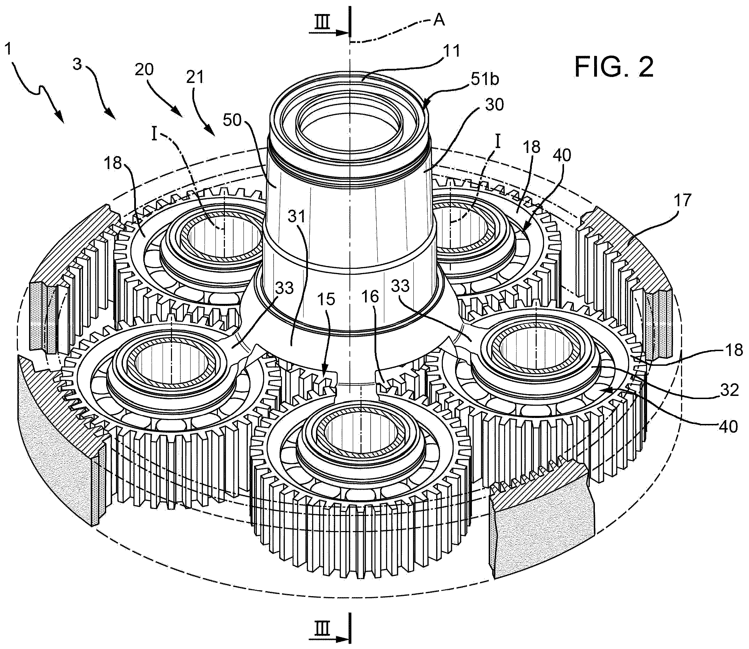

The transmission assembly 3 comprises a terminal stage 20 formed essentially of a planetary gear train 21, which transmits the power to the drive shaft 11 with the correct torque and angular velocity values (Figure 2).

In the case illustrated, the planetary gear train 21 is a reduction gear.

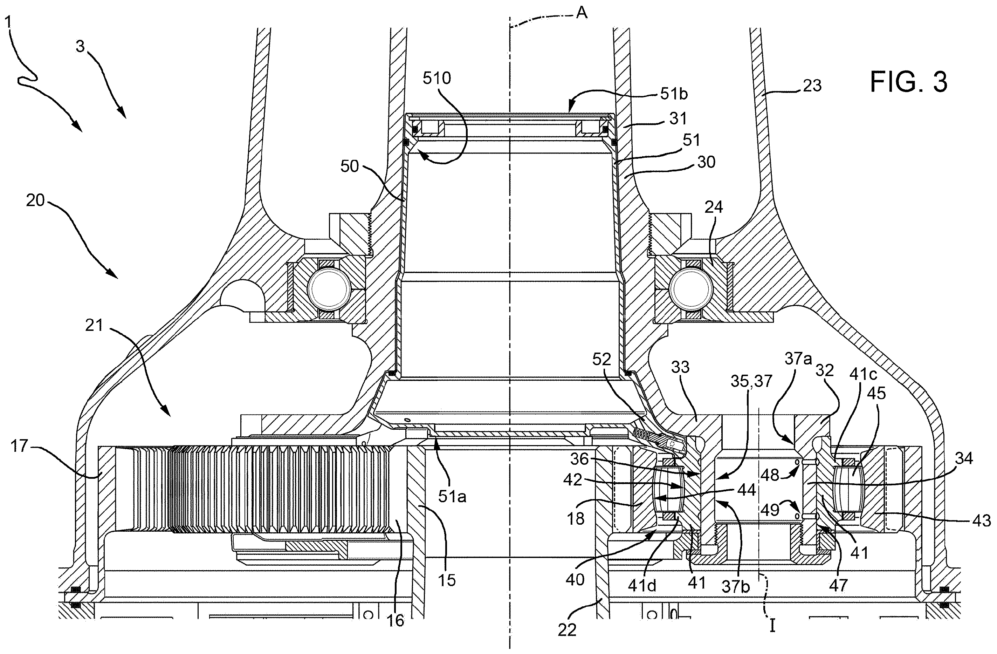

With particular reference to Figure 3, the planetary gear train 21 comprises essentially:
- a sun gear 15 comprising a plurality of teeth 16, rotatable about the axis A and operatively connected to an inlet shaft 22 of the terminal stage 20;
- a crown gear 17 angularly fixed relative to the axis A; and
- a plurality of cog wheels performing the function of respective planets 18 rotatable about respective axes I parallel to the axis A and meshing with the sun gear 15 and the crown gear 17.

The planetary gear train 21 further comprises a planet carrier 30 rotatable about the axis A, connected directly to the drive shaft 11 and connected to the planets 18.

The crown gear 17 has a larger diameter than the sun gear 15 and surrounds the planet carrier 30. The crown gear 17 is furthermore carried by a fixed structure only partially illustrated in the attached figures.

In particular, each planet 18 revolves about its own axis I relative to the planet carrier 30 and describes a revolution motion around the axis A integrally with the planet carrier 30.

The mechanical power enters the planetary gear train 21 at the sun gear 15 and exits, in the direction of the drive shaft 11, at the planet carrier 30, with the correct torque value and number of revolutions.

The planet carrier 30 comprises, in turn (Figures 2 and 3):
- a main body 31 arranged coaxially to the axis A;
- a plurality of pins 32 extending along respective axes I and on which respective planets 18 are revolvingly mounted about the respective axes I;
- a plurality of arms 33 extending radially cantilevered from the main body 31 and each connecting a respective pin 32 to the main body 31; and
- a plurality of rolling bearings 40, each interposed radially between a respective pin 32 and the relative planet 18.

In detail, the main body 31 is opposite the inlet shaft 22 relative to the arms 33.

Preferably, furthermore, all the arms 33 are identical to one another.

Each bearing 40 is adapted to support a respective planet 18 in a revolving manner about the respective axis I on the respective pin 32.

In the following part of the present description, reference will be made to a single bearing 40 and to the relative pin 32, since all the bearings 40 and the pins 32 are identical to one another.

The bearing 40 comprises, in turn (Figure 3):
- a ring 41 angularly fixed relative to the pin 32 and defining a race 42;
- a ring 43 defined integrally by the planet 18, arranged radially more external than the ring 41 relative to the axis I, and defining a race 44 facing the race 42; and
- a plurality of rolling bodies 45 rolling on the races 42, 44.

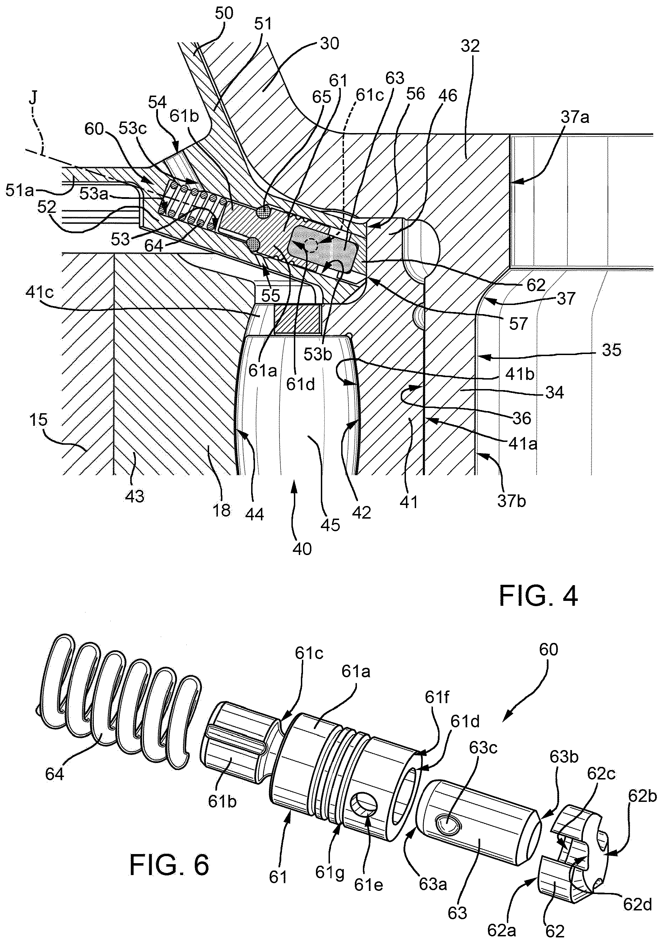

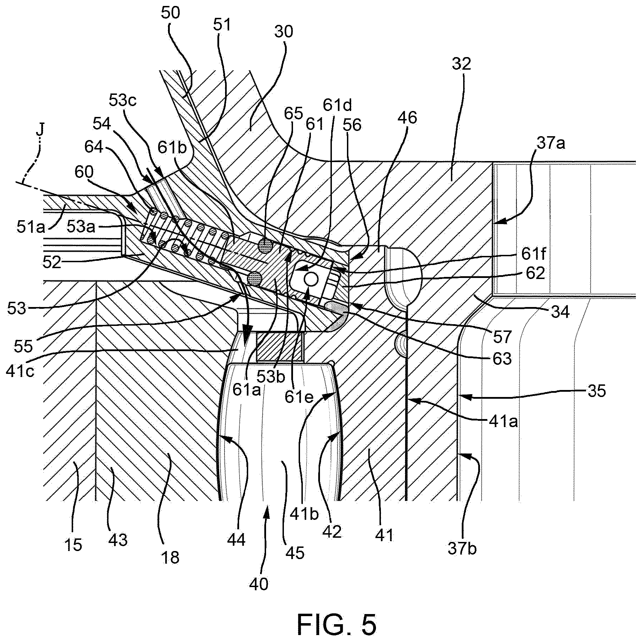

In detail, the ring 41 comprises (Figures 4 and 5):
- a radially inner surface 41a relative to the axis I, which is in contact with the pin 32;
- a radially outer surface 41b relative to the axis I, which comprises the race 42; and
- two annular elements 41c, 41d extending radially cantilevered from the radially outer surface 41b towards the ring 43.

The two annular elements 41c, 41d are spaced from each other parallel to the axis I and define respective shoulders for the bodies 45 parallel to the axis I. More specifically, the annular element 41c is arranged on the side of the arms 33 and the annular element 41d is opposite the annular element 41c relative to the bodies 45 parallel to the axis I.

The pin 32 comprises a cylindrical body 34 extending from the respective arm 33 parallel to the axis I. The cylindrical body 34 comprises, in turn, relative to the axis I:
- a radially inner surface 35;
- a radially outer surface 36; and
- a compartment 37 defined by the radially inner surface 35.

In detail, the compartment 37 comprises a section 37a arranged on the side of the arm 33 and a compartment 37b opposite the arm 33 relative to the section 37a. In further detail, the extension of the section 37a orthogonally to the axis I is smaller than the extension of the section 37b orthogonally to the axis I. The sections 37a and 37b are cylindrical and coaxial to the axis I.

The transmission assembly 3 further comprises a main lubrication circuit 47 - only partially illustrated - inside which a lubricating fluid flows for lubrication of the planetary gear train 21 and, in particular, the planets 18 and bearings 40 (Figure 3).

In detail, in the embodiment illustrated, the pin 32 comprises two holes 48, 49 passing radially to the axis I from the radially inner surface 35 to the radially outer surface 36. In further detail, the holes 48, 49 are spaced from each other parallel to the axis I and arranged at the section 37b. The holes 48 and 49 form part of the main lubrication circuit 47 and are adapted to allow the passage of the lubricating fluid that flows inside it.

The transmission assembly 3 further comprises (Figure 3):
- a rotationally fixed casing 23 housing the planetary gear train 21; and
- a rolling bearing 24 radially interposed between the planet carrier 30 and the casing 23 and adapted to support the rotation of the planet carrier 30 relative to the casing 23.

The transmission assembly 3 comprises:
- a tank 50 for a lubricating fluid; and
- passive retaining means 60 adapted to prevent outflow of the lubricating fluid from the tank 50 when the temperature of the bearing 40 and/or of the planet 18 is below a threshold value and allow outflow of the lubricating fluid from the tank 50 when the temperature of the bearing 40 and/or of the planet 18 is higher than or equal to the threshold value.

In detail, the threshold value could be a range of values.

The lubricating fluid flowing out of the tank 50 is adapted to lubricate the bearing 40 and/or the planet 18.

In the following part of the present description, the temperature of a component (for example, of the bearing 40 or the planet 18) means a local temperature at any point of the component (for example, a point of the component near the retaining means 60), or a mean temperature of the component, or a temperature around the component (for example, the temperature of the air surrounding the component).

Preferably, furthermore, the lubricating fluid that flows in the main lubrication circuit 47 is the same lubricating fluid contained in the tank 50. In addition, the tank 50 is preferably filled with the lubricating fluid before installation. In other words, the tank 50 is a cartridge of lubricating fluid.

The fact that the retaining means 60 are passive means that the passage from the configuration in which they prevent outflow of the lubricating fluid to the configuration in which they allow outflow of the lubricating fluid takes place without the supply of electrical, pneumatic or hydraulic energy from the outside.

In the embodiment illustrated in the Figures from 1 to 6, the retaining means 60 comprise a shutter 60, which can be arranged in:
- a closed configuration, in which it prevents outflow of the lubricating fluid from the tank 50 (Figure 4); or
- an open configuration, in which it allows outflow of the lubricating fluid from the tank 50 (Figure 5).

The shutter 60 is adapted to move automatically from the closed configuration to the open configuration when the temperature of the bearing 40 and/or of the relative planet 18 exceeds the threshold value. Preferably, the shutter 60 is adapted to move from the closed configuration to the open configuration in an irreversible manner. In other words, once arranged in the open configuration, the shutter 60 cannot automatically return to the closed configuration.

In detail, the tank 50 is rotatable about the axis A integrally with the planet carrier 30.

As illustrated in Figure 3, the tank 50 is radially internal to the planet carrier 30 relative to the axis A. In detail, the tank 50 is arranged coaxially to the axis A.

The tank 50 comprises, in turn, a main body 51 and a plurality of appendages 52 extending radially cantilevered from the main body 51. More specifically, the appendages 52 extend radially towards the crown gear 17.

In detail, the main body 51 comprises a compartment 510 adapted to contain at least part of the lubricating fluid of the tank 50.

The main body 51 further comprises a base surface 51a, which faces the sun gear 15 and a top surface 51b opposite the base surface 51a parallel to the axis A.

The tank 50 comprises an appendage 52 at each arm 33. In detail, each appendage 52 is aligned with a respective arm 33 in a circumferential direction relative to the axis A. Furthermore, each appendage 52 is interposed between the respective arm 33 and the respective bearing 40 parallel to the respective axis I. In other words, each appendage 52 extends directly below the respective arm 33 parallel to the respective axis I.

Preferably, furthermore, the extension of each arm 33 in a circumferential direction relative to the axis A is greater than or equal to the extension of the relative appendage 52 in the same circumferential direction.

In detail, the appendages 52 extend from the main body 51 in respective directions J transverse to the axis A. Said directions J are the generatrices of a virtual conical surface having vertical axis coinciding with the axis A and vertex belonging to the axis A and arranged on the side opposite the inlet shaft 22 relative to the sun gear 15. In further detail, the appendages 52 extend from the base surface 51a (Figures 3, 4 and 5).

Below, reference will be made to only one appendage 52 since all the appendages 52 are identical to one another.

The appendage 52 comprises a cavity 53 adapted to house at least partly the shutter 60 and to guide the lubricating fluid (Figures 4 and 5).

The cavity 53 comprises, in turn, an opening 54, which fluidically connects the compartment 510 to the cavity 53 and an opening 55 adapted to allow outflow of the lubricating fluid from the cavity 53 and therefore from the tank 50. In detail, the opening 55 directly faces the bearing 40. In further detail, the opening 55 directly faces the annular element 41c (Figures 4 and 5).

The appendage 52 further comprises a radially external surface 56 relative to the axis A and a further opening 57 arranged at the radially external surface 56.

As illustrated in Figures 4 and 5, the ring 41 comprises a protuberance 46 extending parallel to the axis I on the side of the ring 41 facing the top surface 51b. In detail, the protuberance 46 is radially interposed between the radially internal surface 41a and the radially external surface 41b.

Preferably, the radially external surface 56 abuts against the protuberance 46.

Preferably, furthermore, the protuberance 46 extends throughout the circumferential extension of the ring 41 relative to the axis I.

In the embodiment illustrated, the cavity 53 comprises (Figures 4 and 5):
- a section 53a arranged on the side of the base surface 51a, cylindrical and directed parallel to the direction J;
- a section 53b arranged on the side of the radially external surface 56, also cylindrical and directed parallel to the direction J; and
- a section 53c extending between the opening 54 and the section 53a, having cylindrical shape and directed transversally to the direction J.

In detail, the radial extension of the section 53b in a plane perpendicular to the direction J is greater than the radial extension of the section 53a in a plane perpendicular to the same direction J.

The opening 55 is furthermore arranged at the section 53b (Figures 4 and 5).

The shutter 60 comprises (Figure 6):
- a shuttle 61 slidable inside the cavity 53; and
- a meltable element 63 adapted to be in the solid state below the threshold temperature and adapted to melt when the temperature is equal to or higher than the threshold value.

The shuttle 61 slides between a first position, in which it determines obstruction of the opening 55, and a second position in which it determines unblocking of the opening 55. The shuttle 61 is in the first position when the shutter 60 is in the closed configuration (Figure 4) and in the second position when the shutter 60 is in the open configuration (Figure 5).

The meltable element 63 is adapted to maintain the shuttle 61 in the first position when it is in the solid state and is adapted to determine and/or allow sliding of the shuttle 61 towards the second position when it is at least partly melted.

The shutter 60 further comprises a striker element 62 integral with the appendage 52.

In further detail, when the shutter 60 is in the closed configuration, the meltable element 63 is adapted to keep the shuttle 61 and the striker element 62 at a distance from each other (Figure 4); when the shutter 60 is in the open configuration, the shuttle 61 abuts against the striker element 62 (Figure 5).

The striker element 62 is furthermore arranged at the section 53b and is positioned in abutment against the protuberance 46.

The shutter 60 also comprises elastic means 64 adapted to preload the shuttle 61 towards the second position. In detail, the elastic means 64 comprise a helical spring cooperating in contact with the shuttle 61 on the side opposite the striker element 62.

The shutter 60 further comprises a seal element 65 slidable relative to the cavity 53 integrally with the shuttle 61. In detail, the seal element 65 is fitted around the shuttle 61. In addition, the seal element 65 is interposed between the shuttle 61 and the inner walls of the cavity 53.

When the shutter 60 is in the closed configuration, the seal element 65 obstructs the opening 55 and prevents fluidic communication between the opening 54 and the opening 55 (Figure 4). Vice versa, when the shutter 60 is in the open configuration, the seal element 65 unblocks the opening 55 and allows fluidic communication between the opening 54 and the opening 55 (Figure 5). Therefore, the shuttle 61 contributes only indirectly to obstruction and unblocking of the opening 55.

As illustrated in Figure 6, the shuttle 61 comprises a cylindrical portion 61a arranged on the side of the striker element 62 and a portion 61b also cylindrical and opposite the portion 61a parallel to the direction J. In detail, the radial extension of the portion 61a is greater than the radial extension of the portion 61b.

The shuttle 61 further comprises a seat 61c interposed between the portion 61a and the portion 61b parallel to the direction J and adapted to house the seal element 65.

The shuttle 61 also comprises:
- a compartment 61d arranged at the portion 61a on the side opposite the portion 61b; and
- an opening 61e at the portion 61a, passing radially to the direction J and directly communicating with the compartment 61d.

The shuttle 61 further comprises a flat surface 61f directed perpendicular to the direction J and arranged at one end of the shuttle 61 opposite the portion 61b.

In detail, the compartment 61d has a cylindrical shape and extends from the surface 61f towards the portion 61b for part of the extension of the portion 61a along direction J. In addition, the opening 61e is spaced from the surface 61f parallel to the direction J.

Preferably, the shuttle 61 comprises a plurality of seats 61g adapted to house respective elastic bands. Said seats 61g are arranged at the portion 61a.

The meltable element 63 in the solid state is a cylindrical body comprising:
- two ends 63a, 63b opposite each other in the direction J;
- a protuberance 63c extending radially in the direction J and adapted to engage the opening 61e, so as to prevent the relative sliding between the meltable element 63 in the solid state and the main body 62 parallel to the direction J.

In detail, the meltable element 6 in the solid state is partially housed in the compartment 61d on the side of the end 63a (Figure 4).

The meltable element 63 is made of a material adapted to melt at (namely at values equal to or higher than) or near the temperature threshold value. For example, the meltable element 63 is made of tin or lead, or an alloy thereof.

The striker element 62 is a cylindrical or substantially cylindrical body comprising:
- a flat abutment surface 62a facing the shuttle 61;
- an end surface 62b positioned in abutment against the protuberance 46; and
- an abutment surface 62c interposed between the abutment surface 62a and the end surface 62b parallel to the direction J.

In detail, when the shuttle 61 is in the first position, the end 63b is in contact with the abutment surface 62c; when the shuttle 61 is in the second position, the surface 61f is in contact with the abutment surface 62a.

The striker element 62 further comprises a through opening 62d passing parallel to the direction J and adapted to allow passage of the material of the meltable element 63 in the melted state towards the opening 57.

As illustrated in Figures 4 and 5, the shuttle 61 slides between the section 53a and the section 53b. In detail, the radial extension of the portion 61a is greater than the radial extension of the section 53a and the portion 61a is completely housed at the section 53b. In addition, the elastic means 64 are completely housed at the section 53a.

The operation of the transmission assembly 3 is described below with reference to a single planet 18 and the relative shutter 60, said operation being equal for all the planets 18 and the relative shutters 60. In addition, the operation is described starting from a condition in which the shutter 60 is in the closed configuration and the temperature of the bearing 40 and/or the planet 18 is below the threshold value.

In use, the planetary gear train 21 transmits the power from the inlet shaft 22 to the drive shaft 11 with the correct torque and angular velocity values. During transmission of the motion, the components of the transmission assembly 3 are regularly lubricated by the main lubrication circuit 47.

In detail, the tank 50 rotates integrally with the planet carrier 30 and the outflow of the lubricating fluid from the tank 50 is prevented. In further detail, inside the shutter 60, the meltable element 63 keeps the shuttle 61 at a distance from the striker element 62 and constrains the shuttle 61 in the first position. Consequently, the seal element 65 obstructs the opening 55.

When the temperature of the bearing 40 and/or of the planet 18 reaches or exceeds the threshold value, the meltable element 63 melts. The melted material of the meltable element 63 flows through the openings 62d and 57 and accumulates in the space between the protuberance 46, the appendage 52 and the annular element 41c.

Following melting of the meltable element, the elastic means 64 push the shuttle 61 towards the second position, until the surface 61f abuts against the abutment surface 62a.

During the sliding of the shuttle 61, the opening 55 is unblocked thus allowing the passage of the lubricating fluid from the opening 54 to the opening 55. In detail, the lubricating fluid flows from the compartment 510 in sequence through the opening 54, the section 53c, the section 53a, the section 53b and the opening 55 (as indicated by the arrow illustrated in Figure 5).

The lubricating fluid that has flowed out of the opening 55 runs between the interstices between the rings 41, 43 and the bodies 45 and/or on the surfaces of the planet 18 and/or between the surfaces interposed between the planet 18 and the bearing 40, providing an emergency lubrication of the bearing 40 and/or of the satellite 18.

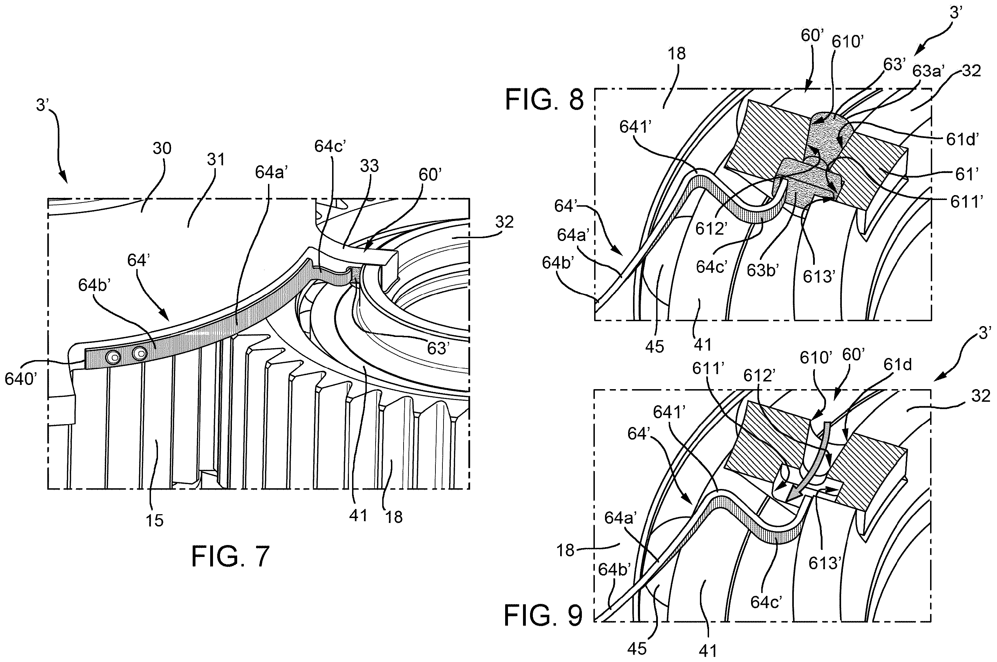

With reference to Figures 7 to 9, the number 3' indicates a transmission assembly according to a second embodiment, which is not part of the present invention. The transmission assembly 3' is similar to the transmission assembly 3 and will be described below only insofar as it differs from the latter; equal or equivalent parts of the transmission assemblies 3, 3' will be identified, where possible, by the same reference numbers.

The transmission assembly 3' differs from the transmission assembly 3 due to the fact that it comprises shutters 60' instead of the shutters 60. Below, reference will be made to one single shutter 60', since all the shutters 60' are identical to one another.

Analogously to the shutters 60, the shutters 60' are adapted to control the flow of lubricating fluid coming from the tank 50 for lubrication of the planet 18 and/or the bearing 40.

The shutter 60' comprises (Figures 8 and 9):
- a main body 61' integral with the tank 50, in particular integrated in or fixed to an arm 33, and comprising a cavity 61d'; and
- a meltable element 63' adapted to be in the solid state below the temperature threshold value and adapted to melt at least partly at the temperature threshold value.

The cavity 61d' comprises an opening 610', which is fluidically connected to the tank 50 and an opening 611', which is adapted to allow outflow of the lubricating fluid from the cavity 61d'.

The meltable element 63' in the solid state occupies at least part of the cavity 61d' and is adapted to prevent the fluidic communication between the opening 610' and the opening 611'. The meltable element 63' is furthermore adapted to allow fluidic communication between the opening 610' and the opening 611' when it is at least partly melted.

In further detail, the cavity 61d' comprises:
- a section 612' extending from the opening 610' and having section with extension gradually decreasing in the direction oriented from the opening 610' to the opening 611'; and
- a section 613' extending from the section 612' to the opening 611'.

Preferably, the section 612' has a conical shape and the section 613' has a parallelepipedal shape.

The cavity 61d' could be directly fluidically connected to the compartment 510, or be connected to a cavity 53 of an appendage 52 of the transmission assembly 3'.

The meltable element 63' in the solid state comprises a conical section 63a', which is housed at the section 612', and a section 63b' having parallelepipedal shape, which is housed at the section 613' (Figure 8).

The shutter 60' further comprises elastic means 64'. Said elastic means 64' comprise an elastic bar 64a' fixed to the planet carrier 30.

The elastic bar 64a' is operatively connected to the meltable element 63' when it is in the solid state (Figure 8) and abuts against the pin 32 when the shutter 60' is in the open configuration (Figure 9). In detail, the elastic bar 64a' is elastically loaded towards the position in which it abuts against the pin 32. In further detail, the elastic bar 64a' is partly embedded in the material of the meltable element 63' in the solid state or engages an opening formed in the meltable element 63' in the solid state.

The elastic bar 64a' comprises, in turn:
- a section 64b', which extends partly in contact with the main body 31; and
- a section 64c', which extends cantilevered from the section 64b' radially relative to the axis A towards the crown gear 17.

In detail, the elastic bar 64a' is fixed to the main body 31 at the section 64b' and is operatively connected to the meltable element 63' in the solid state at the section 64c'. In further detail, the section 64b' is curved and has the shape of an arc of a circle centred or substantially centred in a point belonging to the axis A, when the elastic bar 64a' is in the position it assumes when the meltable element 63' is in the solid state.

Preferably, the section 64c' is adapted to guide the lubricating fluid coming out of the opening 611' towards the surfaces to be lubricated, when the shutter 60' is in the open configuration. More specifically, the section 64c' comprises a surface facing the main body 31, which is directed parallel or substantially parallel to the axis A and which is adapted to guide the lubricating fluid.

In further detail, the section 64b' comprises a first end 640' and a second end 641' opposite each other in the circumferential direction relative to the axis A. The section 64b' is fixed to the main body 31 at the first end 640' and the section 64c' extends from the section 64b' at the second end 641'.

As illustrated in Figures 8 and 9, the section 64c' has an S shape in a plane perpendicular to the axis A.

The operation of the transmission assembly 3' is similar to that of the transmission assembly 3 and will be described below only insofar as it differs from the latter. In particular, the operation is described below with reference to a single planet 18 and to the relative shutter 60', said operation being equal for all the planets 18 and the relative shutters 60'. In addition, the operation is described starting from a condition in which the shutter 60' is in the closed configuration and the temperature of the bearing 40 and/or of the planet 18 is below the threshold value.

In detail, inside the shutter 60', the meltable element 63' occupies the compartment 61d', preventing the passage of the lubricating fluid from the opening 610' to the opening 611'.

When the temperature is equal to or exceeds the threshold value, the meltable element 63' melts due to its proximity to the bearing 40 and/or the planet 18, unblocking the openings 610' and 611' and leaving the elastic means 64' free to come into contact against the pin 32.

The lubricating fluid that has come out of the opening 611' is then guided by the section 64c' and flows into the interstices between the rings 41, 43 and the bodies 45 and/or on the surfaces of the planet 18 and/or between the surfaces interposed between the planet 18 and the bearing 40, providing emergency lubrication of the bearing 40 and/or of the planet 18.

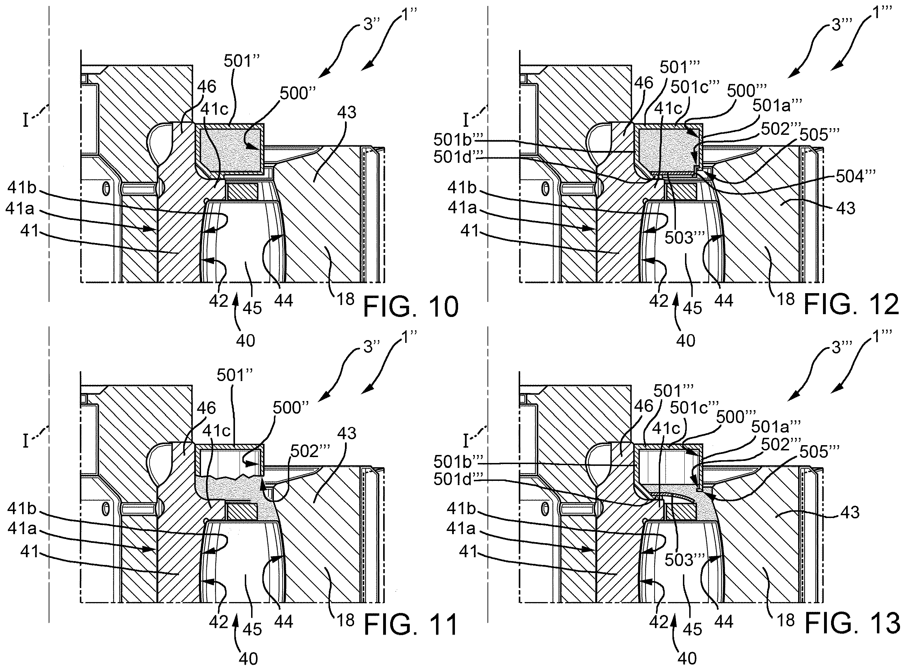

With reference to figures 10 and 11, the number 3" indicates a transmission assembly according to a third embodiment, which is not part of the present invention. The transmission assembly 3'' is similar to the transmission assembly 3, and will be described below only insofar as it differs from the latter; identical or equivalent parts of the transmission assemblies 3; 3" will be indicated, where possible, by the same reference numbers.

The transmission assembly 3'' differs from the transmission assembly 3 due to the fact that it comprises:
- a tank 500'' for a lubricating fluid, for example grease, at one or all the planets 18; and
- passive retaining means 501'' adapted to prevent outflow of the lubricating fluid from the tank 500'' when the temperature of the bearing 40 and/or of the planet 18 is below a threshold value and to allow outflow of the lubricating fluid when the temperature of the bearing 40 and/or of the planet 18 is higher than or equal to the threshold value.

In particular, the retaining means 501'' comprise a casing 501'', which defines the tank 500'' and is adapted to be in the solid state below the temperature threshold value and is adapted to melt at the threshold value.

More specifically, when the casing 501'' begins to melt, it develops one or more through openings 502'' through which the lubricating fluid contained in the tank 500'' flows (Figure 11) .

The tank 500'' is fixed to the ring 41 and is therefore rotatable integrally with the planet carrier 30 about the axis A. In addition, the tank 500'' is preferably filled with the lubricating fluid before installation. In other words, the tank 500'' is a cartridge of lubricating fluid.

In addition, the tank 500" has a rectangular section in a plane passing through the axis I.

In detail, the tank 500'' is arranged in abutment against the annular element 41c parallel to the axis I and is opposite the bodies 45 relative to the annular element 41c parallel to the axis I. The tank 500" is also in abutment against the protuberance 46 radially relative to the axis I.

Preferably, the tank 500'' is a toroidal-shaped body arranged coaxially to the axis I.

The operation of the transmission assembly 3'' is described below starting from a condition in which the temperature of the bearing 40 and/or of the planet 18 is below the threshold value. In said condition, the casing 501'' is completely solid and the outflow of the lubricating fluid from the tank 500'' is prevented.

When the temperature of the bearing 40 and/or of the planet 18 is equal to or higher than the threshold value, the casing 501" melts, developing the openings 502" and allowing outflow of the lubricating fluid contained in the tank 500".

The lubricating fluid that has flowed out of the tank 500" lubricates the surfaces in contact between the bodies 45 and the rings 41, 43 and/or the planet 18.

With reference to figures 12 and 13, a transmission assembly 3‴ according to a fourth embodiment, which is not part of the present invention, is indicated. The transmission assembly 3‴ is similar to the transmission assembly 3'' and will be described below only insofar as it differs from the latter; equal or equivalent parts of the transmission assemblies 3" and 3‴ will be indicated, where possible, by the same reference numbers.

The transmission assembly 3''' differs from the transmission assembly 3'' due to the fact that the tank 500''' comprises a casing 501‴ comprising, in turn, an opening 502''' and passive retaining means 503‴, 504‴.

The retaining means 503‴, 504‴ comprise:
- an elastic element 503‴ arranged in a flat configuration below the temperature threshold value and preloaded towards a bent configuration; and
- a meltable element 504''' adapted to be in the solid state below the temperature threshold value and adapted to melt at least partly at the threshold value.

The meltable element 504‴ is adapted to maintain the elastic element 503‴ in the flat configuration, when it is in the solid state, and is adapted to determine displacement of the elastic element 503‴ to the bent configuration when it melts.

The elastic element 503‴ in the flat configuration obstructs, together with the meltable element 504‴, the opening 502‴ (Figure 12).

In detail, the elastic element 503‴ in the flat configuration is directed perpendicular or substantially perpendicular to the axis I (Figure 12).

The elastic element 503‴ in the bent configuration frees at least partly the opening 502‴, allowing outflow of the lubricating fluid from the tank 500‴. In detail, the elastic element 503‴ in the bent configuration has its concavity facing the bodies 45 (Figure 13).

Preferably, the casing 501‴ is made of metal.

Considering a section of the transmission assembly 3''' in a plane passing through the axis I, the casing 501‴ comprises:
- a surface radially external 501a‴ to the axis I;
- a radially internal surface 501b‴;
- a top surface 501c''' extending between the radially external surface 501a''' and the radially internal surface 501b''' radially relative to the axis I and arranged on the side opposite the bodies 45 parallel to the axis I; and
- a base surface 501d‴ opposite the top surface 501c''' parallel to the axis I and in contact with the annular element 41c.

The radially external surface 501a''' comprises a tooth 505‴ at an end thereof opposite the top surface 501c''' parallel to the axis I. The tooth 505''' extends radially towards the radially internal surface 501b''' (Figures 12 and 13).

The base surface 501d''' extends from the radially internal surface 501b''' towards the radially external surface 501a''' only for part of the radial extension of the tank 500‴.

In further detail, the opening 502‴ is defined by the radial and axial space between the radially external surface 501a''' and the base surface 501d‴.

The opening 502‴, furthermore, faces the bodies 45. In particular, the opening 502‴ faces the annular element 41c.

The elastic element 503''' extends from the radially internal surface 501b'' towards the radially external surface 501a'' radially to the axis I. Preferably, the elastic element 503‴ is spaced from the radially external surface 501a'' both radially to the axis I and parallel to the axis I.

The meltable element 504‴ in the solid state is interposed between the radially external surface 501a'' and the elastic element 503‴ radially to the axis I and parallel to the axis I.

Considering a section of the meltable element 504‴ in a plane passing through the axis I, the meltable element 504‴ in the solid state comprises:
- a first rectilinear section directed parallel to the axis I;
- a second section extending radially from the first section towards the radially external surface 501a‴; and
- a third section extending radially from the first section towards the radially internal surface 501b‴.

The second section and the third section are arranged at respective opposite ends of the first section parallel to the axis I. In other words, the meltable element 504‴ in the solid state has an S shape in a plane passing through the axis I.

In detail, the meltable element 504‴ in the solid state is in contact with the tooth 505''' at the second section and with the elastic element 503‴ at the third section. In further detail, the second section is opposite the third section relative to the tooth 505" and the third section is opposite the second section relative to the elastic element 503‴.

The operation of the transmission assembly 3''' is similar to that of the transmission assembly 3" and will therefore be described insofar as it differs from the latter starting from a condition in which the temperature of the bearing 40 and/or of the planet 18 is below the threshold value and outflow of the lubricating fluid from the tank 500‴ is therefore prevented.

In particular, when the temperature of the bearing 40 and/or of the planet 18 is equal to or exceeds the threshold value, the meltable element 504‴ melts, allowing the elastic element 503‴ to be arranged in the bent configuration.

At this point, the elastic element 503‴ partially uncovers the opening 502‴, allowing outflow of the lubricating fluid from the tank 500‴.

The lubricating fluid that has come out of the tank 500‴ lubricates the surfaces in contact between the bodies 45 and the rings 41, 43 and/or the planet 18.

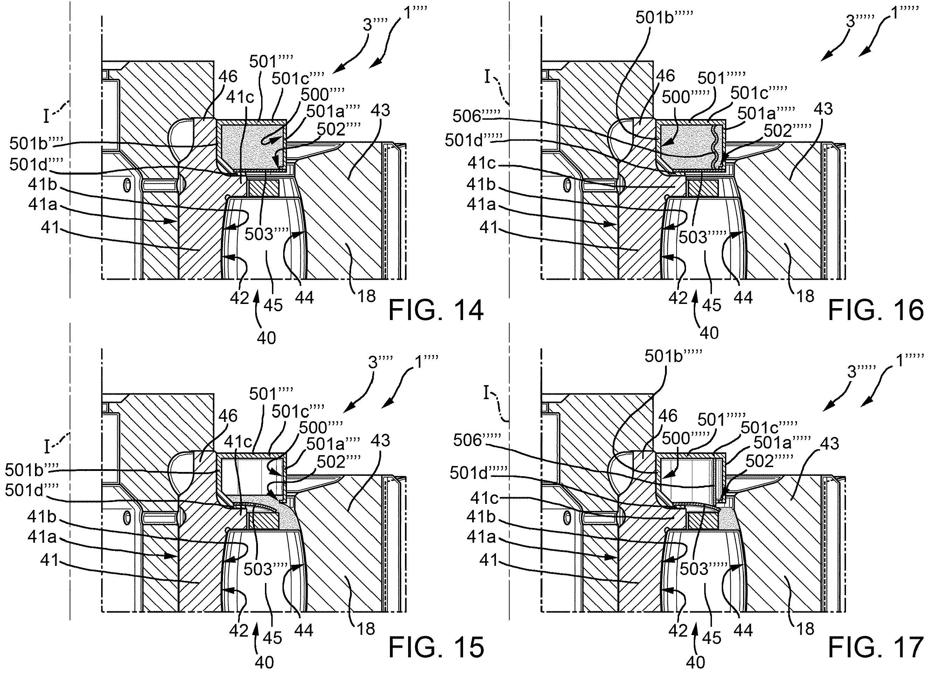

With reference to figures 14 and 15, the number 3ʺʺ indicates a transmission assembly according to a fifth embodiment, which is not part of the present invention. The transmission assembly 3ʺʺ is similar to the transmission assembly 3'' and will be described below only insofar as it differs from the latter; identical or equivalent parts of the transmission assemblies 3"; 3ʺʺ will be indicated, where possible, by the same reference numbers.

The transmission assembly 3ʺʺ differs from the transmission assembly 3'' due to the fact that the tank 500ʺʺ comprises a casing 501ʺʺ comprising, in turn, an opening 502ʺʺ and passive retaining means 503ʺʺ.

The retaining means 503ʺʺ comprise an element 503ʺʺ made of a shape-memory material arranged in a flat configuration below the temperature threshold value and adapted to reacquire a bent configuration at the threshold value.

The element 503ʺʺ in the flat configuration obstructs the opening 502ʺʺ. Preferably, the element 503ʺʺ in the flat configuration is directed perpendicular or substantially perpendicular to the axis I (Figure 14). In further detail, the opening 502ʺʺ is defined by the radial and/or axial space between the radially external surface 501aʺʺ and the base surface 501dʺʺ.

The element 503ʺʺ in the bent configuration frees at least partly the opening 502ʺʺ, allowing outflow of the lubricating fluid. In detail, the element 503ʺʺ in the bent configuration has its concavity facing the bodies 45 (Figure 15).

The element 503ʺʺ in the flat configuration extends from the radially internal surface 501bʺʺ towards the radially external surface 501aʺʺ radially relative to the axis I and is in contact with the radially external surface 501aʺʺ.

Preferably, the casing 501ʺʺ is made of metal.

The operation of the transmission assembly 3ʺʺ is similar to that of the transmission assembly 3'' and will therefore be described insofar as it differs from the latter and starting from a condition in which the temperature of the bearing 40 and/or of the planet 18 is below the threshold value and outflow of the lubricating fluid from the tank 500ʺʺ is prevented.

When the temperature of the bearing 40 and/or of the planet 18 is equal to or exceeds the threshold value, the element 503ʺʺ returns to the bent configuration, partly uncovering the opening 502ʺʺ and allowing outflow of the lubricating fluid from the tank 500ʺʺ.

The lubricating fluid that has flowed out of the tank 500ʺʺ lubricates the surfaces in contact between the bodies 45 and the rings 41, 43 and/or the planet 18.

With reference to figures 16 and 17, the number 3ʺʺ indicates a transmission assembly according to a sixth embodiment, which is not part of the present invention. The transmission assembly 3''''' is similar to the transmission assembly 3" and will be described below only insofar as it differs from the latter; identical or equivalent parts of the transmission assemblies 3''; 3‴ʺ will be indicated, where possible, by the same reference numbers.

The transmission assembly 3‴ʺ differs from the transmission assembly 3'' due to the fact that the tank 500''''' comprises a casing 501‴ʺ comprising, in turn, an opening 502‴ʺ and passive retaining means 503‴ʺ, 506‴ʺ.

The retaining means 503‴ʺ, 506‴ʺ comprise:
- an elastic element 503''''' arranged in a flat configuration below the temperature threshold value and preloaded towards a bent configuration; and
- an element 506''''' made of a shape-memory material, adapted to cooperate in contact with the elastic element 503‴ʺ. The element 506‴ʺ is adapted to be arranged in a configuration compressed below the temperature threshold value and adapted to reacquire an extended configuration at the temperature threshold value.

The elastic element 503‴ʺ in the flat configuration obstructs the opening 502‴ʺ. Preferably, the element 503‴ʺ in the flat configuration is directed perpendicular or substantially perpendicular to the axis I (Figure 16).

The element 503‴ʺ in the bent configuration frees at least partly the opening 502‴ʺ, allowing outflow of the lubricating fluid. In detail, the element 503‴ʺ in the bent configuration has its concavity facing the bodies 45 (Figure 17).

In further detail, the opening 502‴ʺ is defined by the radial and/or axial space between the radially external surface 501a‴ʺ and the base surface 501d‴ʺ.

The elastic element 503‴ʺ extends from the radially internal surface 501b‴ʺ towards the radially external surface 501a‴ʺ radially to the axis I and is fixed to the radially external surface 501a‴ʺ.

The element 506‴ʺ in the compressed configuration is adapted to maintain the elastic element 503‴ʺ in the flat configuration. The element 506‴ʺ in the extended configuration is adapted to move away and/or detach the elastic element 503''''' from the casing 501‴ʺ - in particular, from the radially external surface 501a‴ʺ - allowing the elastic element 503‴ʺ to be arranged in the bent configuration.

Preferably, the element 506‴ʺ extends into the inner volume of the tank 500‴ʺ and comprises a first end and a second end opposite each other parallel to the axis I. In detail, the first end is fixed to the top surface 501c‴ʺ and the second end is fixed to the elastic element 503‴ʺ.

In addition, preferably, the element 506‴ʺ in the extended configuration is parallel or substantially parallel to the axis I.

Preferably, the casing 501‴ʺ is made of metal.

The operation of the transmission assembly 3‴ʺ is similar to that of the transmission assembly 3'' and will therefore be described insofar as it differs from the latter and starting from a condition in which the temperature of the bearing 40 and/or of the planet 18 is below the threshold value and outflow of the lubricating fluid from the tank 500‴ʺ is therefore prevented.

In particular, when the temperature of the bearing 40 and/or of the planet 18 is equal to or exceeds the threshold value, the element 506‴ʺ returns to the extended configuration, detaching the elastic element 503‴ʺ from the radially external surface 501a‴ʺ.

The elastic element 503‴ʺ is therefore arranged in the bent configuration, partly uncovering the opening 502‴ʺ and allowing outflow of the lubricating fluid from the tank 500‴ʺ .

The lubricating fluid that has flowed out of the tank 500‴ʺ lubricates the surfaces in contact between the bodies 45 and the rings 41, 43 and/or the planet 18.

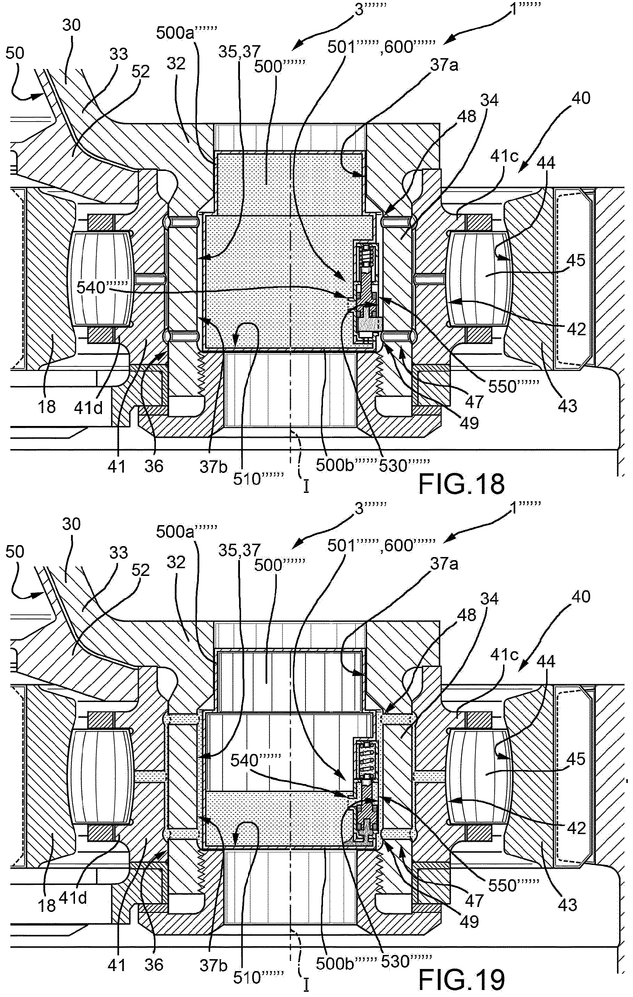

With reference to figures 18 to 21, the number 3‴ʺ indicates a transmission assembly according to a seventh embodiment of the present invention. The transmission assembly 3‴ʺ is similar to the transmission assembly 3 and will be described below only insofar as it differs from the latter; identical or equivalent parts of the transmission assemblies 3; 3‴ʺ will be indicated, where possible, by the same reference numbers.

The transmission assembly 3‴‴ differs from the transmission assembly 3 due to the fact that it comprises:
- a tank 500‴‴ for a lubricating fluid at one or all the planets 18; and
- passive retaining means 501‴‴ adapted to prevent outflow of the lubricating fluid from the tank 500‴‴ when the temperature of the bearing 40 and/or the planet 18 is below a threshold value and to allow outflow of the lubricating fluid when the temperature of the bearing 40 and/or of the planet 18 is higher than or equal to the threshold value.

Below, reference will be made to only one tank 500‴‴ and to the relative retaining means 501‴‴, since all the tanks 500‴‴ and the retaining means 501‴‴ are identical.

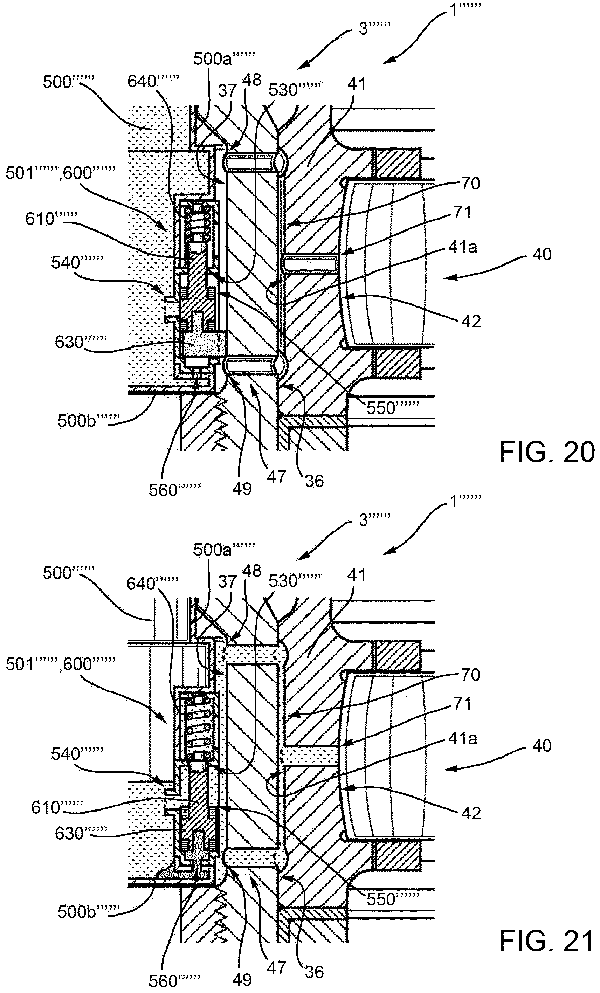

In detail, the retaining means 501‴‴ comprise a shutter 600‴‴, which can be arranged in:
- a closed configuration, in which it prevents outflow of the lubricating fluid from the tank 500‴‴ (Figures 18 and 20); or
- an open configuration, in which it allows outflow of the lubricating fluid from the tank 500‴‴ (Figures 19 and 21).

The shutter 600‴‴ is adapted to automatically move from the closed configuration to the open configuration when the temperature of the bearing 40 and/or of the relative planet 18 is equal to or exceeds the threshold value. Preferably, the shutter 600‴‴ is adapted to move from the closed configuration to the open configuration in an irreversible manner.

The tank 500‴‴ is rotatable about the axis A integrally with the planet carrier 30. In detail, the tank 500‴‴ is housed in the compartment 37 and is fixed to the pin 32 of the relative planet 18.

In further detail, the tank 500‴‴ comprises a section 500a‴‴ arranged on the side of the arm 33 and a compartment 500b‴‴ opposite the arm 33 relative to the section 500a‴‴. In further detail, the extension of the section 500a‴‴ orthogonally to the axis I is less than the extension of the section 500b‴‴ orthogonally to the axis I. Preferably, furthermore, the section 500a‴‴ and the section 500b‴‴ are cylindrical and coaxial to the axis I.

As illustrated in Figures 18 and 19, the section 500a‴‴ is housed at the section 37a and the section 500b‴‴ is housed at the section 37b. In detail, the section 500a‴‴ is in contact with the radially internal surface 35 at the section 37a.

The tank 500‴‴ comprises a compartment 510‴‴ adapted to contain at least part of the lubricating fluid of the tank 500‴‴ and a cavity 530‴‴ fluidically connected to the compartment 510‴‴ adapted to house the shutter 600‴‴.

The cavity 530‴‴ comprises:
- an opening 540‴‴, which fluidically connects the compartment 510‴‴ to the cavity 530‴‴; and
- an opening 550‴‴ adapted to allow outflow of the lubricating fluid from the cavity 530‴‴ and therefore from the tank 500‴‴.

Preferably, the cavity 530‴‴ has a cylindrical shape having axis parallel to the axis I.

In detail, the opening 550‴‴ is fluidically connected to the compartment 37. In further detail, the opening 550‴‴ communicates with the compartment 37 both when the shutter 600‴‴ is in the closed configuration (Figures 18 and 20) and when the shutter 600‴‴ is in the open configuration (Figures 19 and 21).

In the embodiment illustrated, the cavity 530‴‴ is arranged at the section 500b‴‴ and is spaced radially from the axis I.

The shutter 600‴‴ is adapted to automatically move from the closed configuration to the open configuration when the temperature of the bearing 40 and/or of the planet 18 exceeds a threshold value.

The shutter 600‴‴ comprises:
- a shuttle 610‴‴ slidable inside the cavity 530‴‴; and
- a meltable element 630‴‴ adapted to be in the solid state below the temperature threshold value and adapted to melt at least partly at the temperature threshold value.

The shuttle 610‴‴ is slidable between a first position and a second position parallel to the axis I. The shuttle 610‴‴ is in the first position when the shutter 600‴‴ is in the closed configuration (Figures 18, 20) and in the second position when the shuttle 600‴‴ is in the open configuration (Figures 19, 21).

The shuttle 610‴‴ in the first position determines obstruction of the opening 540‴‴; the shuttle 610‴‴ in the second position determines unblocking of the opening 540‴‴.

In further detail, when the shutter 600‴‴ is in the closed configuration, the shuttle 610‴‴ abuts against the meltable element 630‴‴ in the solid state.

The meltable element 630‴‴ is adapted to maintain the shuttle 610‴‴ in the first position when it is in the solid state and is adapted to determine sliding of the shuttle 610‴‴ towards the second position when it is at least partly melted.

The shutter 600‴‴ also comprises elastic means 640‴‴ adapted to elastically preload the shuttle 610‴‴ towards the second position. In detail, the elastic means 640‴‴ comprise a helical spring adapted to cooperate in contact with the shuttle 610‴‴ on the side opposite the meltable element 630‴‴.

The cavity 530‴‴ also comprises an opening 560‴‴ for outflow of the melted material of the meltable element 630‴‴ from the cavity 530‴‴.

In the embodiment illustrated, the main lubrication circuit 47 also comprises:
- a duct 70, which fluidically connects the openings 48 and 49 to each other; and
- a duct 71, which extends between the duct 70 and the race 42.

In detail, the duct 70 is defined by the interstice between the radially internal surface 41a and the radially external surface 36. The duct 71 extends from the radially internal surface 41a to the radially external surface 41b, preferably orthogonally to the axis I.

The openings 48, 49 and/or the ducts 70, 71 are adapted to be crossed both by the lubricating fluid of the main lubrication circuit 47 and by the lubricating fluid that flows out of the tank 500‴‴.

Below, operation of the transmission assembly 3‴‴ is described starting from a condition in which the shutter 600‴‴ is in the closed configuration and the temperature of the bearing 40 and/or of the planet 18 is below the threshold value. In said condition, the opening 540‴‴ is obstructed and outflow of the lubricating fluid from the cavity 503‴ is prevented.

When the temperature of the planet 18 and/or of the bearing 40 is equal to or exceeds the threshold value, the meltable element 630‴‴ melts and flows through the opening 560‴‴.

Following melting of the meltable element, the elastic means 640‴‴ push the shuttle 610‴‴ towards the second position, until it unblocks the opening 540‴‴ thus allowing passage of the lubricating fluid from the opening 540‴‴ to the opening 550‴‴.

The lubricating fluid that has flowed out of the opening 550‴‴ flows in sequence through the compartment 37, the openings 48, 49, and the ducts 70 and 71, lubricating the bearing 40 and/or the planet 18.

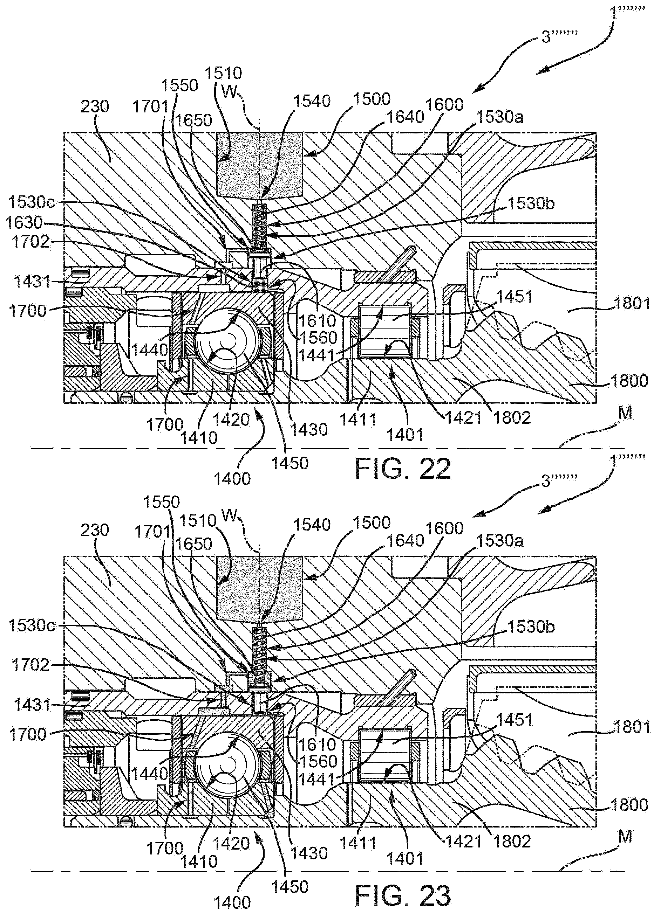

With reference to figures 22 and 23, the number 3‴ʺʺ indicates a transmission assembly according to an eighth embodiment of the present invention.

The transmission assembly 3‴ʺʺ comprises:
- a rotationally fixed support 230;
- a cog wheel 1800 rotatable about its own rotation axis M relative to the support 230; and
- two rolling bearings 1400, 1401 adapted to revolvingly support the cog wheel 1800 relative to the support 230.

The transmission assembly 3‴ʺʺ further comprises:
- a cog wheel 1801 rotatable about its own rotation axis and meshing with the cog wheel 1800; and
- a shaft 1802 - only partially illustrated - on which the cog wheel 1800 is fitted or with which the cog wheel 1800 is formed in one piece, and rotatable about the axis M.

The bearing 1400 comprises, in turn:
- a ring 1410 defining a race 1420 and in contact with the shaft 1802;
- a ring 1430 defining a race 1440 facing the race 1420 and radially spaced from the ring 1410 relative to the axis M; and
- a plurality of rolling bodies 1450, in particular spheres, rolling on the races 1420, 1440.

The bearing 1401 comprises:
- a ring 1411 defining a race 1421 and defined integrally by the shaft 1802;
- a ring 1431 defining a race 1441 facing the race 1421 and radially spaced from the ring 1411 relative to the axis M; and
- a plurality of rolling bodies 1451, in particular rollers directed parallel to the axis M, rolling on the races 1421, 1441.

In detail, the ring 1431 is in contact with the support 230 and the bodies 1451 are spaced from the bodies 1450 parallel to the axis M. In further detail, the ring 1430 is in contact with the ring 1431 on the side of the ring 1431 opposite the support 230.

In addition, the rings 1430 and 1431 are rotationally fixed.

In the embodiment illustrated, the cog wheels 1800 and 1801 are bevel gears and the rotation axis M is perpendicular to the rotation axis of the cog wheel 1801.

In addition, the transmission assembly 3‴ʺʺ forms part of a collector stage of the aircraft 1‴ʺʺ without this being understood as limiting in any way.

The transmission assembly 3‴ʺʺ comprises:
- a tank 1500 for a lubricating fluid; and
- passive retaining means 1600 comprising a shutter 1600 adapted to prevent outflow of the lubricating fluid from the tank 1500 when the temperature of the bearing 1400 and/or of the bearing 1401 and/or of the cog wheel 1800 and/or of the shaft 1802 is below a threshold value and to allow outflow of the lubricating fluid when the temperature of the bearing 1400 and/or of the bearing 1401 and/or of the cog wheel 1800 and/or of the shaft 1802 is higher than or equal to the threshold value.

In detail, the tank 1500 is rotationally fixed relative to the axis M. In further detail, the tank 1500 is partly integrated in the support 230 and partly in the ring 1431. According to a variation not illustrated, the tank 1500 is completely integrated in the support 230.

The tank 1500 comprises a compartment 1510 adapted to contain at least a part of the lubricating fluid of the tank 1500 and a cavity 1530 fluidically connected to the compartment 1510 and adapted to house the shutter 1600. In addition, the tank 1500 is preferably filled with the lubricating fluid before installation. In other words, the tank 1500 is a cartridge of lubricating fluid.

The cavity 1530 comprises:
- an opening 1540, that fluidically connects the compartment 1510 to the cavity 1530; and
- an opening 1550 adapted to allow outflow of the lubricating fluid from the cavity 1530 and therefore from the tank 1500.

Preferably, the cavity 1530 has a cylindrical shape having an axis W, which is perpendicular to the axis M.

In the embodiment illustrated, the cavity 1530 comprises two sections 1530a, 1530b at the support 23 and a section 1530c at the ring 1431.

The section 1530a extends from the opening 1540 and sections 1530a, 1530b and 1530c are contiguous to one another and extend in sequence parallel to the axis W.

In detail, the extension of the cross section of the section 1530b perpendicular to the axis W is greater than the extension of the cross section of the section 1530a perpendicular to the axis W. Preferably, furthermore, the extension of the cross section of the section 1530c is equal to that of the section 1530a.

The shutter 1600 can be arranged in:
- a closed configuration, in which it prevents outflow of the lubricating fluid from the tank 1500 (Figure 22); or
- an open configuration, in which it allows outflow of the lubricating fluid from the tank 1500 (Figure 23).

The shutter 1600 is adapted to move automatically from the closed configuration to the open configuration, when the temperature of the bearing 1400 and/or of the bearing 1401 and/or of the cog wheel 1800 and/or of the shaft 1802 exceeds the threshold value. Preferably, the shutter 1600 is adapted to move from the closed configuration to the open configuration in an irreversible manner.

The shutter 1600 comprises:
- a shuttle 1610 slidable inside the cavity 1530; and
- a meltable element 1630 adapted to be in the solid state below the temperature threshold value and adapted to melt at least partly at the temperature threshold value.

The shuttle 1610 slides between a first position and a second position parallel to the axis W. In detail, the distance between the shuttle 1610 and the ring 1430 is greater in the first position than in the second position.

The shuttle 1610 is in the first position when the shutter 1600 is in the closed configuration (Figure 22) and in the second position when the shutter 1600 is in the open configuration (Figure 23).

The shuttle 1610 in the first position determines obstruction of the opening 1550; the shuttle 1610 in the second position determines unblocking of the opening 1550 (Figure 23). In detail, the shuttle 1610 contributes only indirectly to obstruction and unblocking of the opening 1550.

In further detail, when the shutter 1600 is in the closed configuration, the shuttle 1610 abuts against the meltable element 1630 in the solid state.

The meltable element 1630 is adapted to maintain the shuttle 1610 in the first position when in the solid state and is adapted to determine sliding of the shuttle 1610 towards the second position when it is at least partly melted.

The shutter 1600 also comprises elastic means 1640 adapted to preload the shuttle 1610 towards the second position. In detail, the elastic means 1640 comprise a helical spring arranged in contact with the shuttle 1610 on the side opposite the meltable element 1630.

The shutter 1600 further comprises a seal element 1650 fixed to the shuttle 1610 on the side opposite the meltable element 1630. The seal element 1650 slides relative to the cavity 1530 integrally with the shuttle 1610.

When the shuttle 1610 is in the first position, the seal element 1650 prevents fluidic communication between the opening 1540 and the opening 1550 (Figure 22). Vice versa, when the shuttle 1610 is in the second position, the seal element 1650 allows fluidic communication between the opening 1540 and the opening 1550.

The meltable element 1630 in the solid state is a cylindrical body and is adapted to cooperate with the ring 1430. In the embodiment illustrated, the meltable element 1630 in the solid state is arranged directly in abutment against the ring 1430. According to an alternative not illustrated, one or more elements are interposed between the meltable element 1630 in the solid state and the ring 1430.

The meltable element 1630 is made of a material adapted to melt at or near the threshold temperature. For example, the meltable element 1630 is made of tin or lead, or an alloy thereof.

The cavity 1530 also comprises an opening 1560 for outflow of the melted material of the meltable element 1630 from the cavity 1530. In detail, the opening 1560 is arranged at the section 1530c.

The bearing 1400 further comprises one or more ducts 1700 passing through the ring 1410 and the ring 1430 parallel to the axis W or transversely to the axis W. The ducts 1700 are adapted to be crossed by the lubricating fluid.

The support 230 comprises ducts 1701, which extend from the opening 1550 and are adapted to be crossed by the lubricating fluid.

The bearing 1401 comprises ducts 1702, which fluidically connect the ducts 1701 with at least some of the ducts 1700. In detail, the ducts 1702 are arranged at the ring 1431. According to a variation not illustrated, the ducts 1700 are directly fluidically connected to the ducts 1701.

The operation of the transmission assembly 3‴ʺʺ starting from a condition in which the shutter 1600 is in the closed configuration and the temperature of the bearing 1400 and/or of the bearing 1401 and/or of the cog wheel 1800 and/or of the shaft 1802 is lower than the threshold value is described below.

In said condition, the seal element 1650 obstructs the opening 1550 and the meltable element 1630 is in abutment against the ring 1430 (Figure 22).

When the temperature of the bearing 1400 and/or of the bearing 1401 and/or of the cog wheel 1800 and/or of the shaft 1802 is equal to or higher than the threshold value, the meltable element 1630 melts and flows through the opening 1560.

Following melting of the meltable element, the elastic means 1640 push the shuttle 1610 towards the second position, until it unblocks the opening 1550 thus allowing passage of the lubricating fluid from the opening 1540 to the opening 1550.

The lubricating fluid that has come out of the opening 1550 flows in sequence through the ducts 1701, 1702 and 1700, lubricating the bearing 1400 and/or the bearing 1401 and/or the cog wheel 1800 and/or the shaft 1802.

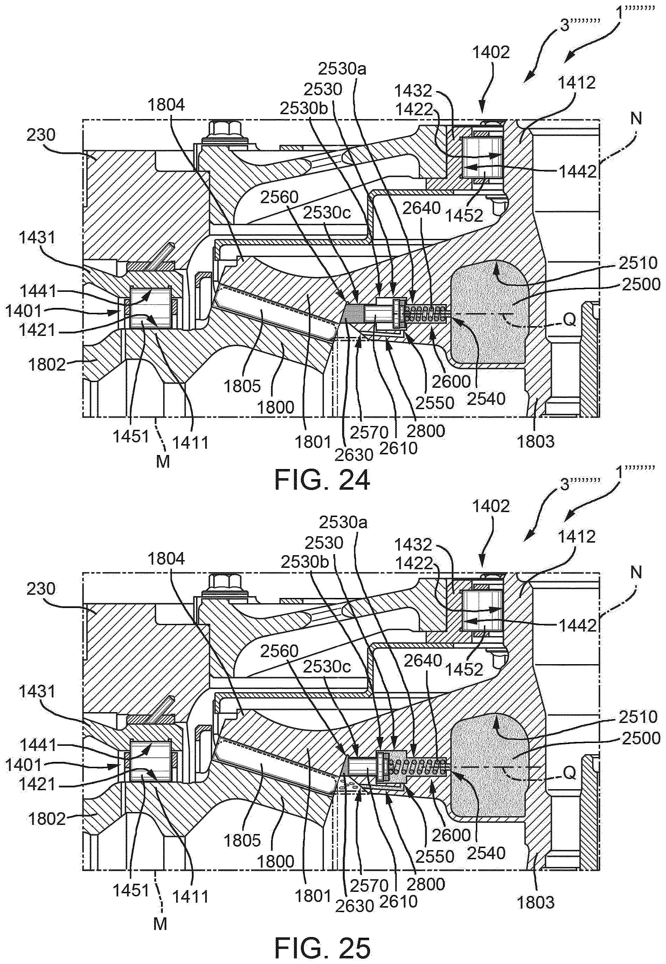

With reference to figures 24 and 25 the number 3‴ʺʺ indicates a transmission assembly according to a ninth embodiment of the present invention. The transmission assembly 3‴ʺʺ is similar to the transmission assembly 3‴ʺʺ and will be described below only insofar as it differs from the latter; identical or equivalent parts of the transmission assemblies 3‴ʺʺ; 3‴ʺʺ will be indicated, where possible, by the same reference numbers.

Analogously to the transmission assembly 3‴ʺʺ, the transmission assembly 3‴‴ʺ comprises the cog wheels 1800, 1801, the bearings 1400, 1401 and the support 230. In addition, the transmission assembly 3‴‴ʺ comprises:
- a shaft 1803 on which the cog wheel 1801 is fitted or with which the cog wheel 1801 is formed in one piece, and rotatable about a rotation axis N orthogonal to the axis M; and
- a rolling bearing 1402 adapted to support the cog wheel 1801 in a revolving manner relative to the support 230.

The bearing 1402 comprises:
- a ring 1412 defining a race 1422 and defined integrally by the shaft 1803;
- a ring 1432 defining a race 1442 facing the race 1422 and radially spaced from the ring 1412 relative to the axis N; and
- a plurality of rolling bodies 1452, in particular rollers directed parallel to the axis N, rolling on the races 1422, 1442.

In detail, the cog wheel 1801 comprises a main body 1804 and an inner toothing 1805 extending from the main body 1804.

The transmission assembly 3‴‴ʺ differs from the transmission assembly 3‴‴ʺ due to the fact that it comprises:
- a tank 2500 for a lubricating fluid integrated in the cog wheel 1801 and therefore revolving relative to the axis N; and
- passive retaining means 2600 comprising a shutter 2600 and adapted to prevent outflow of the lubricating fluid from the tank 2500 when the temperature of the bearing 1402 and/or of the cog wheel 1801 and/or of the shaft 1803 is below a threshold value and to allow outflow of the lubricating fluid when the temperature of the bearing 1402 and/or of the cog wheel 1801 and/or of the shaft 1803 is higher than or equal to the threshold value.

The tank 2500 comprises a compartment 2510 adapted to contain at least part of the lubricating fluid of the tank 2500 and a cavity 2530 fluidically connected to the compartment 2510 and adapted to house the shutter 2600. In addition, the tank 2500 is preferably filled with the lubricating fluid before installation. In other words, the tank 2500 is a cartridge of lubricating fluid.

The cavity 2530 comprises:
- an opening 2540, that fluidically connects the compartment 2510 to the cavity 2530;
- an opening 2550 adapted to allow outflow of the lubricating fluid from the cavity 2530 and therefore from the tank 2500.

Preferably, the cavity 2530 has a cylindrical shape with axis Q, which is perpendicular to the axis N.

In the embodiment illustrated, the cavity 2530 comprises, in sequence:
- a section 2530a extending from the opening 2540;
- a section 2530b; and
- a section 2530c.

In detail, the extension of the cross section of the section 2530b perpendicular to the axis Q is greater than the extension of the cross section of the section 2530a perpendicular to the axis Q. Preferably, furthermore, the extension of the cross section of the section 2530c perpendicular to the axis Q is equal to that of the section 2530a.

The shutter 2600 can be arranged in:
- a closed configuration, in which it prevents outflow of the lubricating fluid from the tank 2500 (Figure 24); or
- an open configuration, in which it allows outflow of the lubricating fluid from the tank 2500 (Figure 25).

The shutter 2600 is adapted to move automatically from the closed configuration to the open configuration, when the temperature of the bearing 1402 and/or of the cog wheel 1801 and/or of the shaft 1803 exceeds the threshold value. Preferably, the shutter 2600 is adapted to move from the closed configuration to the open configuration in an irreversible manner.

The shutter 2600 comprises:
- a shuttle 2610 slidable inside the cavity 2530;
- a meltable element 2630, which is in the solid state below the temperature threshold value and which is adapted to melt at the temperature threshold value.

In detail, the shuttle 2610 slides between a first position and a second position parallel to the axis Q. In detail, the shuttle 2610 is in the first position when the shutter 2600 is in the closed configuration (Figure 24) and in the second position when the shutter 2600 is in the open configuration (Figure 25). In addition, the distance between the shuttle 2610 and the toothing 1805 parallel to the axis Q is greater in the first position than in the second position.

The meltable element 2630 is adapted to maintain the shuttle 2610 in the first position when it is in the solid state and is adapted to determine sliding of the shuttle 2610 towards the second position when it is at least partly melted.

In further detail, when the shutter 2600 is in the closed configuration, the shuttle 2610 abuts against the meltable element 2630 in the solid state. The meltable element 2630 in the solid state furthermore abuts directly against the main body 1804 (Figure 24).

The shutter 2600 further comprises elastic means 2640 adapted to preload the shuttle 2610 towards the second position. In detail, the elastic means 2640 comprise a helical spring arranged in contact with the shuttle 2610 on the side opposite the meltable element 2630.

The shutter 2600 further comprises a seal element 2650 fixed to the shuttle 2610 on the side opposite the meltable element 2630. The seal element 2650 slides relative to the cavity 2530 integrally with the shuttle 2610.

When the shuttle 2610 is in the first position, the seal element 2650 obstructs the opening 2550 and prevents fluidic communication between the opening 2540 and the opening 2550 (Figure 24). Vice versa, when the shuttle 2610 is in the second position, the seal element 2650 unblocks the opening 2550 and allows fluidic communication between the opening 2540 and the opening 2550 (Figure 25). Therefore, the shuttle 2610 contributes only indirectly to the obstruction and unblocking of the opening 2550.

The meltable element 2630 in the solid state is a cylindrical body arranged directly in abutment against the main body 1804.

The meltable element 2630 is made of a material adapted to melt at or near the threshold temperature. For example, the meltable element 2630 is made of tin or lead, or an alloy thereof.

The cavity 2530 also comprises an opening 2560 for outflow of the melted material of the meltable element 2630 from the cavity 2530.

Preferably, the cog wheel 1801 further comprises an opening 2570 and a duct 2800, which extends inside the main body 1804 and which fluidically connects the opening 2550 to the opening 2570.

The operation of the transmission assembly 3‴‴ʺ starting from a condition in which the shutter 2600 is in the closed configuration and the temperature of the bearing 1402 and/or of the cog wheel 1801 and/or of the shaft 1803 is below the threshold value (Figure 24) is described below.

When the temperature is equal to or exceeds the threshold value, the meltable element 2630 melts at least partly, the elastic means 2640 push the shuttle 2610 towards the second position and the opening 2550 is unblocked. Consequently, the passage of the lubricating fluid from the opening 2540 to the opening 2550 is allowed.

The lubricating fluid that has come out of the opening 2550 flows in sequence through the ducts 2800 to the opening 2570 and lubricates the cog wheels 1800 and/or 1801 and/or the shaft 1803.

From an examination of the characteristics of the transmission assembly 3; 3‴‴ʺ; 3‴‴ʺ; 3‴‴ʺ according to the present invention, the advantages it offers are evident.

In particular, since the transmission assembly 3; 3‴‴; 3‴ʺʺ; 3‴‴ʺ comprises the passive retaining means 60; 600‴‴; 1600; 2600, which are adapted to selectively allow outflow of the lubricating fluid from the tank 50; 500‴‴; 1500; 2500, it is possible to ensure lubrication of the critical components of the transmission assembly in an efficient manner. In fact, the retaining means 60; 1600; 2600 do not require the supply of electrical, pneumatic or hydraulic energy to operate and are calibrated as a function of the threshold temperature of the part to be lubricated.

Since the passive retaining means 60; 600‴‴; 1600; 2600 comprise meltable portions that melt at the threshold temperature the outflow of the lubricating fluid from the tank 50; 500‴‴; 1500; 2500 is effectively obtained when the part to be lubricated reaches said threshold temperature.

Since the tank 50; 500‴‴; 2500 is carried by a rotating component, outflow of the lubricating fluid in emergency conditions is facilitated by the centrifugal force to which it is subject during the rotation.

Since the shutter 60; 600‴‴; 1600; 2600 comprises the elastic means 64; 640‴‴; 1640; 2640, the movement of the shuttle 61; 610‴‴; 1610; 2610 towards the second position, in which it allows outflow of the lubricating fluid, is facilitated in emergency conditions.

Lastly it is clear that modifications and variations that do not depart from the protective scope defined by the claims can be made to the transmission assembly 3; 3‴‴; 3‴ʺʺ; 3‴‴ʺ described and illustrated here.

In particular, the transmission assembly 3, 3‴ʺ; 3‴‴; 3‴ʺʺ; 3‴‴ʺ could be adapted to transmit the motion from one or more turbines to a plurality of accessory devices intended, for example, to provide the energy necessary for operation of the on-board equipment.

The transmission assembly 3 could comprise, in addition to the tank 50:
- one or more tanks 500'' and relative retaining means 501''; and/or
- one or more tanks 500‴ and relative retaining means 503‴, 504‴; and/or
- one or more tanks 500ʺʺ and relative retaining means 503ʺʺ; and/or
- one or more tanks 500‴ʺ and relative retaining means 503‴ʺ, 506‴ʺ; and/or
- one or more tanks 500‴‴ and relative retaining means 600‴‴.

The meltable element 63; 630‴‴; 1630; 2630 could be adapted to melt at a temperature lower or higher than the temperature threshold value of the component to be lubricated, for example, as a function of the distance between the meltable element and the component to be lubricated and/or the assembly characteristics.

The transmission assembly 3‴‴ could comprise passive retaining means analogous to the retaining means 60' or 501ʺ'; or 503‴, 504‴ or 503ʺʺ or 503‴ʺ, 506‴ʺ.

The tank 500‴‴ could be revolving relative to the respective axis I integrally with the respective planet 18.

The aircraft 1; 1‴‴; 1‴ʺʺ; 1‴‴ʺ could be a convertiplane or an airplane.

Some or all the components of the shutter 60; 600‴‴; 1600; 2600 (the shuttle 61; 610‴‴, 1610; 2610, the striker element 62, the meltable element 63; 630‴‴; 1630; 2630, the elastic means 64; 640‴‴; 1640; 2640, the seal element 65; 1650; 2650) could be combined, integrated and/or welded to one another. In detail, some or all the components of the shutter 60; 600‴‴; 1600; 2600 could be produced by additive manufacturing.

The shutter 60; 600‴‴; 1600; 2600 could be housed outside the cavity 53; 530‴‴; 1530; 2530.

Alternatively or additionally, the meltable element 63; 504‴; 630‴‴; 1630; 2630 could be adapted to be in a nondeformed state below the threshold temperature and adapted to deform and/or lose its mechanical characteristics when the temperature is equal to or exceeds the threshold value.

## Claims

1. A transmission assembly (3; 3‴‴; 3‴ʺʺ; 3‴‴ʺ) for an aircraft (1; 1‴‴; 1‴ʺʺ;1‴‴ʺ), comprising at least a member to be lubricated (18; 40; 1800; 1801; 1400; 1401) for transmission of the motion;
**characterised in that** it comprises:
- at least one tank (50; 500‴‴; 1500; 2500) adapted to contain a lubricating fluid; and
- passive retaining means (60; 600‴‴; 1600; 2600) adapted to prevent, in use, the outflow of said lubricating fluid from said tank (50; 500‴‴; 1500; 2500) when the temperature of said member to be lubricated (18; 40; 1800; 1801; 1400; 1401) is below a threshold value and to allow, in use, the outflow of said lubricating fluid from said tank (50; 500‴‴; 1500; 2500) towards said member to be lubricated (18; 40; 1800; 1801; 1400; 1401), when the temperature of said member to be lubricated (18; 40; 1800; 1801; 1400; 1401) is higher than said threshold value;
wherein said tank (50; 500‴‴; 1500; 2500) comprises at least a first opening (55; 550‴‴; 1550; 2550) adapted to allow, in use, the outflow of said lubricating fluid;
said passive retaining means (60; 600‴‴; 1600; 2600) furthermore comprising a shutter (60; 600‴‴; 1600; 2600) housed at least partly inside or outside said tank (50; 500‴‴; 1500; 2500);
said shutter (60; 600‴‴; 1600; 2600) comprising, in turn:
- a first main body (61; 610‴‴; 1610; 2610) slidable between a first position in which, in use, it determines the obstruction of said first opening (55; 550‴‴; 1550; 2550) and a second position in which, in use, it determines the unblocking of said first opening (55; 550‴‴; 1550; 2550); and
- a meltable element (63; 630‴‴; 1630; 2630) adapted to be, in use, in the solid state below said threshold value and being adapted to melt at least partly and/or deform at said threshold value;
said meltable element (63; 630‴‴; 1630; 2630) being adapted to maintain, in use, said first main body (61; 610‴‴; 1610; 2610) in said first position, when it is in the solid state and being adapted to determine, in use, the sliding of said first main body (61; 610‴‴; 1610; 2610) towards said second position, when it is at least partly melted;
wherein said tank (50; 500‴‴; 1500; 2500) comprises:
- a compartment (510; 510‴‴; 1510; 2510) adapted to contain, in use, at least part of said lubricating fluid of said tank (50; 500‴‴; 1500; 2500); and
- at least one cavity (53; 530‴‴; 1530; 2530) fluidically connected to said compartment (510; 510‴‴; 1510; 2510);
said cavity (53; 530‴‴; 1530; 2530) comprising, in turn:
- a second opening (54; 540‴‴; 1540; 2540), that fluidically connects said compartment (510; 510‴‴; 1510; 2510) to said cavity (53; 530‴‴; 1530; 2530); and
- said first opening (55; 550‴‴; 1550; 2550) adapted to allow, in use, the outflow of said lubricating fluid from said cavity (53; 530‴‴);
said first main body (61; 610‴‴; 1610; 2610) being slidable inside said cavity (53; 530‴‴; 1530; 2530).

2. The transmission assembly according to claim 1, **characterised in that** it comprises a further member for transmission of the motion;
said member to be lubricated (18; 40; 1801) being rotatable relative to said further member for transmission of the motion about a first rotation axis (A; N; I);
said tank (50; 500‴‴; 2500) being revolving integrally with said member to be lubricated (18; 40; 1801) relative to said first axis (A; N; I).

3. The transmission assembly according to claim 1 or 2,
wherein said shutter (60; 600‴‴; 1600; 2600) further comprises elastic means (64; 640‴‴; 1640; 2640) adapted to elastically preload said first main body (61; 610‴‴; 1610; 2610) towards said second position.

4. The transmission assembly according to any one of the preceding claims, comprising a planetary gear train (21) adapted to transmit power, in use, from a first shaft (22) to a second shaft (11) of said aircraft (1; 1‴‴):
said planetary gear train (21) comprising:
- a sun gear (15) rotatable about a first axis (A) and adapted to be operatively connected to said first shaft (22);
- a crown gear (17) angularly fixed relative to said first axis (A);
- a plurality of planets (18) rotatable about respective second axes (I) parallel to said first axis (A) and meshing, in use, with said sun gear (15) and said crown gear (17); and
- a planet carrier (30) rotatable about said first axis (A), operatively connected to said planets (18) and adapted to be operatively connected to said second shaft (11);
said planet carrier (30) comprising:
- a second main body (31) arranged coaxially to said first axis (A);
- a plurality of pins (32) extending along respective said second axes (I) and on which respective said planets (18) are revolvingly mounted about the respective said second axes (I);
- a plurality of arms (33) extending radially cantilevered from said second main body (31) and each connecting a respective said pin (32) to said second main body (31); and
- a plurality of first rolling bearings (40) radially interposed between respective said pins (32) and said planets (18).

5. The transmission assembly according to claim 4, wherein said tank (50; 500‴‴) is carried by said planet carrier (30) and said at least one member to be lubricated (18) is a said planet (18) and/or a said first bearing (40).

6. The transmission assembly according to claim 4 or 5, wherein said tank (50) comprises:
- a third main body (51);
- a plurality of appendages (52) extending radially cantilevered from said third main body (51) towards said crown gear (17) relative to said first axis (A);
each said appendage (52) comprising a respective said cavity (53) and being interposed between a respective said arm (33) and the respective said first bearing (40) parallel to the respective said second axis (I).

7. The transmission assembly according to claim 6, wherein said first opening (55) of said cavity (53) of each said appendage (52) directly faces the respective said first bearing (40).

8. The transmission assembly according to any one of claims 4 to 6, wherein said tank (500‴‴) is radially inside a said planet (18) relative to the respective said second axis (I) and said member to be lubricated (18) is said planet (18) and/or said first bearing (40).

9. The transmission assembly according to claim 1 or 3, comprising:
- a rotationally fixed support (230);
- a cog wheel (1800) rotatable about a third rotation axis (M) relative to said support (230); and
- at least one second rolling bearing (1400, 1401) adapted to support, in use, said cog wheel (1800) in a revolving manner relative to said support (230);
wherein said tank (1500) is integrated in and/or fixed to said support (230).

10. The transmission assembly according to claim 9, wherein said second bearing (1400) comprises:
- a first ring (1410) defining a first race (1420);
- a second ring (1430) defining a second race (1440) facing said first race (1420); and
- a plurality of rolling bodies (1450) adapted to roll, in use, on said first and second race (1420, 1440);
wherein said meltable element (1630) in said solid state is adapted to cooperate with said second ring (1430).

11. The transmission assembly according to claim 9 or 10, wherein **characterised in that** said second bearing (1400) comprises a plurality of first ducts (1700), which extend through said first ring (1410) and/or said second ring (1430) and adapted to be crossed, in use, by said lubricating fluid; said support (230) comprising second ducts (1701) adapted to fluidically connect said first opening (1550) to at least some of said first ducts (1700).

12. The transmission assembly according to claim 1 to 3, wherein said member to be lubricated (1801) for transmission of the motion comprises a cog wheel (1801);
said cog wheel (1801) comprising, in turn:
- a fourth main body (1804);
- a toothing (1805) fixed to or integrated in said fourth main body (1804)
wherein said tank (2500) is integrated in said fourth main body (1804) and in that said meltable element (2630) in said solid state is arranged, in use, in abutment against said fourth main body (1804).

13. An aircraft (1; 1‴‴; 1‴‴′; 1ʺʺʺʺ), in particular an aircraft capable of hovering, comprising a transmission assembly (3; 3‴‴; 3‴ʺʺ; 3ʺʺʺʺ) according to any one of the preceding claims.

## Patentansprüche

1. Eine Übertragungseinrichtung (3; 3‴‴; 3‴ʺʺ; 3ʺʺʺʺ) für ein Luftfahrzeug (1; 1‴‴; 1‴ʺʺ; 1‴‴ʺ), umfassend zumindest ein zu schmierendes Element (18; 40; 1800; 1801; 1400; 1401) zur Übertragung der Bewegung;
**dadurch gekennzeichnet, dass** sie umfasst:
zumindest einen Tank (50; 500‴‴; 1500; 2500), der dazu eingerichtet ist, ein Schmiermittel aufzunehmen; und
passive Rückhaltemittel (60; 60‴‴; 1600; 2600), die dazu eingerichtet sind, im Betrieb den Ausfluss des genannten Schmiermittels aus dem genannten Tank (50; 500‴‴; 1500; 2500) zu verhindern, wenn die Temperatur des zu schmierenden Elements (18; 40; 1800; 1801; 1400; 1401) unter einem Schwellenwert liegt, und im Betrieb den Ausfluss des Schmiermittels aus dem Tank (50; 500‴‴; 1500; 2500) zu dem zu schmierenden Element (18; 40; 1800; 1801; 1400; 1401) zu ermöglichen, wenn die Temperatur des zu schmierenden Elements (18; 40; 1800; 1801; 1400; 1401) höher ist als der Schwellenwert; wobei
der Tank (50; 500‴‴; 1500; 2500) zumindest eine erste Öffnung (55; 550‴‴; 1550; 2550) umfasst, die dazu eingerichtet ist, im Betrieb den Ausfluss des Schmiermittels zu ermöglichen;
die passiven Rückhaltemittel (60; 600‴‴; 1600; 2600) ferner einen Verschluss (60; 600‴‴; 1600; 2600) umfassen, der zumindest teilweise innerhalb oder außerhalb des Tanks (50; 500‴‴; 1500; 2500) aufgenommen ist;
der Verschluss (60; 600‴‴; 1600; 2600) seinerseits umfasst:
einen ersten Hauptkörper (61; 610‴‴; 1610; 2610), der zwischen einer ersten Position, in der er im Betrieb den Verschluss der ersten Öffnung (55; 550‴‴; 1550; 2550) bewirkt, und einer zweiten Position, in der er im Betrieb die Freigabe der ersten Öffnung (55; 550‴‴; 1550; 2550) bewirkt, verschiebbar ist; und
ein schmelzbares Element (63; 630‴‴; 1630; 2630), das dazu eingerichtet ist, im Betrieb unterhalb des genannten Schwellenwerts im festen Zustand vorzuliegen und dazu eingerichtet ist bei dem Schwellenwert zumindest teilweise zu schmelzen und/oder sich zu verformen;
wobei das schmelzbare Element (63; 630‴‴; 1630; 2630) dazu eingerichtet ist, im Betrieb den ersten Hauptkörper (61; 610‴‴; 1610; 2610) in der genannten ersten Position zu halten, wenn es im festen Zustand ist, und dazu eingerichtet ist, im Betrieb das Verschieben des ersten Hauptkörpers (61; 610‴‴; 1610; 2610) in Richtung der zweiten Position zu bewirken, wenn es zumindest teilweise geschmolzen ist;
wobei der Tank (50; 50‴‴; 1500; 2500) umfasst:
ein Abteil (510; 510‴‴; 1510; 2510), das dazu eingerichtet ist, im Betrieb zumindest einen Teil des Schmiermittels des Tanks (50; 500‴‴; 1500; 2500) aufzunehmen; und
zumindest eine Kavität (53; 530‴‴; 1530; 2530), die mit dem Abteil (510; 510‴‴; 1510; 2510) fluidverbunden ist;
wobei die Kavität (53; 530‴‴; 1530; 2530) ihrerseits umfasst:
eine zweite Öffnung (54; 540‴‴; 1540; 2540), die das Abteil (510; 510‴‴; 1510; 2510) fluidisch mit der Kavität (53; 530‴‴; 1530; 2530) verbindet; und
die erste Öffnung (55; 550‴‴; 1550; 2550), die dazu eingerichtet ist, im Betrieb den Ausfluss des Schmiermittels aus der genannten Kavität (53; 530‴‴; 1530; 2530) zu ermöglichen;
wobei der erste Hauptkörper (61; 610‴‴; 1610; 2610) innerhalb der genannten Kavität (53; 530‴‴; 1530; 2530) verschiebbar ist.

2. Die Übertragungseinrichtung nach Anspruch 1, **dadurch gekennzeichnet, dass** sie ein weiteres Element zur Übertragung der Bewegung umfasst;
wobei das zu schmierende Element (18; 40; 1801) relativ zu dem weiteren Element zur Übertragung der Bewegung um eine erste Drehachse (A; N; I) drehbar ist;
wobei sich der Tank (50; 500‴‴; 2500) gemeinsam mit dem zu schmierenden Element (18; 40; 1801) relativ zu der ersten Achse (A; N; I) dreht.

3. Die Übertragungseinrichtung nach Anspruch 1 oder 2, wobei der Verschluss (60; 600‴‴; 1600; 2600) ferner elastische Mittel (64; 640‴‴; 1640; 2640) umfasst, die dazu eingerichtet sind, den ersten Hauptkörper (61; 610‴‴; 1610; 2610) elastisch in Richtung der zweiten Position vorzuspannen.

4. Die Übertragungseinrichtung nach einem der vorhergehenden Ansprüche, umfassend ein Planetengetriebe (21), das dazu eingerichtet ist, im Betrieb Leistung von einer ersten Welle (22) auf eine zweite Welle (11) des Luftfahrzeugs (1; 1‴‴) zu übertragen;
wobei das Planetengetriebe (21) umfasst:
ein Sonnenrad (15), das um eine erste Achse (A) drehbar ist und dazu eingerichtet ist, betriebsmäßig mit der ersten Welle (22) verbunden zu werden;
ein Hohlrad (17), das in Bezug auf die erste Achse (A) winkelfest ist;
eine Mehrzahl von Planetenrädern (18), die um jeweilige zweite Achsen (I) parallel zu der ersten Achse (A) drehbar sind und die im Betrieb mit dem Sonnenrad (15) und dem Hohlrad (17) kämmen; und
einen Planetenträger (30), der um die erste Achse (A) drehbar ist, betriebsmäßig mit den Planetenrädern (18) verbunden ist und dazu eingerichtet ist, betriebsmäßig mit der zweiten Welle (11) verbunden zu werden;
wobei der Planetenträger (30) umfasst:
einen zweiten Hauptkörper (31), der koaxial zu der ersten Achse (A) angeordnet ist;
eine Mehrzahl von Zapfen (32), die sich entlang der jeweiligen zweiten Achsen (I) erstrecken und auf denen die jeweiligen Planetenräder (18) um die jeweiligen genannten zweiten Achsen (I) drehbar gelagert sind;
eine Mehrzahl von Armen (33), die sich radial auskragend von dem zweiten Hauptkörper (31) erstrecken und jeweils einen jeweiligen Zapfen (32) mit dem zweiten Hauptkörper (31) verbinden; und
eine Mehrzahl erster Wälzlager (40), die radial zwischen den jeweiligen Zapfen (32) und den Planetenrädern (18) angeordnet sind.

5. Die Übertragungseinrichtung nach Anspruch 4, wobei der Tank (50; 500‴‴) von dem Planetenträger (30) getragen wird und wobei das zumindest eine zu schmierende Element (18) ein Planetenrad (18) und/oder ein erstes Lager (40) ist.

6. Die Übertragungseinrichtung nach Anspruch 4 oder 5, wobei der Tank (50) umfasst:
einen dritten Hauptkörper (51);
eine Mehrzahl von Fortsätzen (52), die sich radial auskragend von dem dritten Hauptkörper (51) in Richtung des Hohlrads (17) relativ zu der ersten Achse (A) erstrecken;
wobei jeder Fortsatz (52) eine jeweilige Kavität (53) umfasst und zwischen einem jeweiligen Arm (33) und dem jeweiligen ersten Lager (40) parallel zur jeweiligen zweiten Achse (I) angeordnet ist;

7. Die Übertragungseinrichtung nach Anspruch 6, wobei die erste Öffnung (55) der Kavität (53) jedes Fortsatzes (52) dem jeweiligen ersten Lager (40) direkt gegenüberliegt.

8. Die Übertragungseinrichtung nach einem der Ansprüche 4 bis 6, wobei der Tank (500‴‴) radial innerhalb eines Planetenrads (18) relativ zur jeweiligen zweiten Achse (I) liegt und wobei das zu schmierende Element (18) das Planetenrad (18) und/oder das erste Lager (40) ist.

9. Die Übertragungseinrichtung nach Anspruch 1 oder 3, umfassend:
einen drehfesten Träger (230);
ein Zahnrad (1800), das relativ zu dem Träger (230) um eine dritte Drehachse (M) drehbar ist; und
zumindest ein zweites Wälzlager (1400, 1401), das dazu eingerichtet ist, das Zahnrad (1800) im Betrieb drehbar relativ zu dem Träger (230) zu lagern;
wobei der Tank (1500) in den Träger (230) integriert ist und/oder an diesem befestigt ist.

10. Die Übertragungseinrichtung nach Anspruch 9, wobei das zweite Lager (1400) umfasst:
einen ersten Ring (1410), der eine erste Laufbahn (1420) definiert;
einen zweiten Ring (1430), der eine zweite Laufbahn (1440) definiert, die der ersten Laufbahn (1420) gegenüberliegt; und
eine Mehrzahl von Wälzkörpern (1450), die dazu eingerichtet sind, im Betrieb auf der ersten und zweiten Laufbahn (1420, 1440) abzurollen;
wobei das schmelzbare Element (1630) in seinem festen Zustand dazu eingerichtet ist, mit dem zweiten Ring (1430) zusammenzuwirken.

11. Die Übertragungseinrichtung nach Anspruch 9 oder 10, wobei das zweite Lager (1400) eine Mehrzahl erster Kanäle (1700) umfasst, die sich durch den ersten Ring (1410) und/oder den zweiten Ring (1430) erstrecken und dazu eingerichtet sind, im Betrieb von dem Schmiermittel durchströmt zu werden;
wobei der Träger (230) zweite Kanäle (1701) umfasst, die dazu eingerichtet sind, die erste Öffnung (1550) fluidisch mit wenigstens einigen der ersten Kanäle (1700) zu verbinden.

12. Die Übertragungseinrichtung nach Anspruch 1 bis 3, wobei das zu schmierende Element (1801) zur Übertragung der Bewegung ein Zahnrad (1801) umfasst;
wobei das Zahnrad (1801) seinerseits umfasst:
einen vierten Hauptkörper (1804);
eine Verzahnung (1805), die an dem vierten Hauptkörper (1804) befestigt ist oder in den vierten Hauptkörper (1804) integriert ist;
wobei der Tank (2500) in den vierten Hauptkörper (1804) integriert ist und wobei das schmelzbare Element (2630) in seinem festen Zustand im Betrieb an dem vierten Hauptkörper (1804) anliegend angeordnet ist.

13. Ein Luftfahrzeug (1; 1‴‴; 1‴ʺʺ; 1‴‴ʺ), insbesondere ein zum Schwebeflug fähiges Luftfahrzeug, umfassend eine Übertragungseinrichtung (3; 3‴‴; 3‴ʺʺ; 3ʺʺʺʺ) nach einem der vorhergehenden Ansprüche.

## Revendications

1. Ensemble de transmission (3 ; 3‴‴ ; 3‴ʺʺ ; 3‴‴ʺ) pour un aéronef (1 ; 1‴‴ ; 1‴ʺʺ ; 1‴‴ʺ), comprenant au moins un organe à lubrifier (18 ; 40 ; 1800 ; 1801 ; 1400 ; 1401) de transmission du mouvement ;
**caractérisé en ce qu'**il comprend :
- au moins un réservoir (50 ; 500‴ʺ ; 1500 ; 2500) adapté pour contenir un fluide lubrifiant ; et
- des moyens de retenue passifs (60 ; 600‴ʺ ; 1600 ; 2600) adaptés pour empêcher, lors de l'utilisation, l'écoulement dudit fluide lubrifiant depuis ledit réservoir (50 ; 500‴ʺ ; 1500 ; 2500) lorsque la température dudit organe à lubrifier (18 ; 40 ; 1800 ; 1801 ; 1400 ; 1401) est inférieure à une valeur seuil et pour permettre, lors de l'utilisation, l'écoulement dudit fluide lubrifiant depuis ledit réservoir (50 ; 500‴ʺ ; 1500 ; 2500) vers ledit organe à lubrifier (18 ; 40 ; 1800 ; 1801 ; 1400 ; 1401), lorsque la température dudit organe à lubrifier (18 ; 40 ; 1800 ; 1801 ; 1400 ; 1401) est supérieure à ladite valeur seuil ;
dans lequel ledit réservoir (50 ; 500‴‴ ; 1500 ; 2500) comprend au moins une première ouverture (55 ; 550‴‴ ; 1550 ; 2550) adaptée pour permettre, lors de l'utilisation, l'écoulement dudit fluide lubrifiant ;
lesdits moyens de retenue passifs (60 ; 600‴‴ ; 1600 ; 2600) comprenant en outre un obturateur (60 ; 600‴‴ ; 1600 ; 2600) logé au moins partiellement à l'intérieur ou à l'extérieur dudit réservoir (50 ; 500‴‴ ; 1500 ; 2500) ;
ledit obturateur (60 ; 600‴‴ ; 1600 ; 2600) comprenant, à son tour :
- un premier corps principal (61 ; 610‴‴ ; 1610 ; 2610) pouvant coulisser entre une première position dans laquelle, lors de l'utilisation, il détermine l'obstruction de ladite première ouverture (55 ; 550‴‴ ; 1550 ; 2550) et une deuxième position dans laquelle, lors de l'utilisation, il détermine le déblocage de ladite première ouverture (55 ; 550‴‴ ; 1550 ; 2550) ; et
- un élément fusible (63 ; 630‴ʺ ; 1630 ; 2630) adapté pour être, lors de l'utilisation, à l'état solide en dessous de ladite valeur seuil et étant adapté pour fondre au moins partiellement et/ou se déformer à ladite valeur seuil ;
ledit élément fusible (63 ; 630‴‴ ; 1630 ; 2630) étant adapté pour maintenir, lors de l'utilisation, ledit premier corps principal (61 ; 610‴‴ ; 1610 ; 2610) dans ladite première position, lorsqu'il est à l'état solide, et étant également adapté pour déterminer, lors de l'utilisation, le coulissement dudit premier corps principal (61 ; 610‴‴ ; 1610 ; 2610) vers ladite deuxième position, lorsqu'il est au moins partiellement fondu ;
dans lequel ledit réservoir (50 ; 500‴‴ ; 1500 ; 2500) comprend :
- un compartiment (510 ; 510‴‴ ; 1510 ; 2510) adapté pour contenir, lors de l'utilisation, au moins une partie dudit fluide lubrifiant dudit réservoir (50 ; 500‴‴ ; 1500 ; 2500) ; et
- au moins une cavité (53 ; 530‴ʺ ; 1530 ; 2530) reliée fluidiquement audit compartiment (510 ; 510‴‴ ; 1510 ; 2510) ;
ladite cavité (53 ; 530‴‴ ; 1530 ; 2530) comprenant, à son tour :
- une deuxième ouverture (54 ; 540‴‴ ; 1540 ; 2540), qui relie fluidiquement ledit compartiment (510 ; 510‴‴ ; 1510 ; 2510) à ladite cavité (53 ; 530‴‴ ; 1530 ; 2530) ; et
- ladite première ouverture (55 ; 550ʺ‴ ; 1550 ; 2550) adaptée pour permettre, lors de l'utilisation, l'écoulement dudit fluide lubrifiant hors de ladite cavité (53 ; 530"""') ;
ledit premier corps principal (61 ; 610‴ʺ ; 1610 ; 2610) pouvant coulisser à l'intérieur de ladite cavité (53 ; 530ʺʺʺ ; 1530 ; 2530).

2. Ensemble de transmission selon la revendication 1, **caractérisé en ce qu'**il comprend un autre organe de transmission du mouvement ;
ledit organe à lubrifier (18 ; 40 ; 1801) pouvant tourner par rapport audit autre organe de transmission du mouvement autour d'un premier axe de rotation (A ; N ; I) ;
ledit réservoir (50 ; 500‴‴ ; 2500) tournant d'un seul tenant avec ledit organe à lubrifier (18 ; 40 ; 1801) par rapport audit premier axe (A ; N ; I).

3. Ensemble de transmission selon la revendication 1 ou 2,
dans lequel ledit obturateur (60 ; 600ʺʺʺ ; 1600 ; 2600) comprend en outre des moyens élastiques (64 ; 640ʺʺʺ ; 1640 ; 2640) adaptés pour précharger élastiquement ledit premier corps principal (61 ; 610‴‴ ; 1610 ; 2610) vers ladite deuxième position.

4. Ensemble de transmission selon l'une quelconque des revendications précédentes, comprenant un train planétaire (21) adapté pour transmettre de la puissance, lors de l'utilisation, d'un premier arbre (22) à un deuxième arbre (11) dudit aéronef (1 ; 1‴‴) :
ledit train planétaire (21) comprenant :
- un planétaire (15) pouvant tourner autour d'un premier axe (A) et adapté pour être relié de manière opérationnelle audit premier arbre (22) ;
- une couronne (17) fixée de manière angulaire par rapport audit premier axe (A) ;
- une pluralité de satellites (18) pouvant tourner autour de deuxièmes axes (I) respectifs parallèles audit premier axe (A) et s'engrenant, lors de l'utilisation, avec ledit planétaire (15) et ladite couronne (17) ; et
- un porte-satellites (30) pouvant tourner autour dudit premier axe (A), relié de manière opérationnelle auxdits satellites (18) et adapté pour être relié de manière opérationnelle audit deuxième arbre (11) ;
ledit porte-satellites (30) comprenant :
- un deuxième corps principal (31) agencé coaxialement par rapport audit premier axe (A) ;
- une pluralité de goupilles (32) s'étendant le long desdits deuxièmes axes (I) respectifs et sur lesquelles lesdits satellites (18) respectifs sont montés en rotation autour desdits deuxièmes axes (I) respectifs ;
- une pluralité de bras (33) s'étendant radialement en porte-à-faux à partir dudit deuxième corps principal (31) et reliant chacun une goupille respective desdites goupilles (32) audit deuxième corps principal (31) ; et
- une pluralité de premiers paliers à roulement (40) interposés radialement entre lesdites goupilles (32) respectives et lesdits satellites (18).

5. Ensemble de transmission selon la revendication 4, dans lequel ledit réservoir (50 ; 500‴ʺ) est porté par ledit porte-satellites (30) et ledit au moins un organe à lubrifier (18) est un desdits satellites (18) et/ou un desdits premiers paliers (40).

6. Ensemble de transmission selon la revendication 4 ou 5, dans lequel ledit réservoir (50) comprend :
- un troisième corps principal (51) ;
- une pluralité d'appendices (52) s'étendant radialement en porte-à-faux depuis ledit troisième corps principal (51) vers ladite couronne (17) par rapport audit premier axe (A) ;
chacun desdits appendices (52) comprenant une cavité respective desdites cavités (53) et étant interposé entre un bras respectif desdits bras (33) et ledit premier palier (40) respectif parallèlement audit deuxième axe (I) respectif.

7. Ensemble de transmission selon la revendication 6, dans lequel ladite première ouverture (55) de ladite cavité (53) de chacun desdits appendices (52) fait directement face audit premier palier (40) respectif.

8. Ensemble de transmission selon l'une quelconque des revendications 4 à 6, dans lequel ledit réservoir (500‴‴) est radialement à l'intérieur de l'un desdits satellites (18) par rapport audit deuxième axe (I) respectif et ledit organe à lubrifier (18) est ledit satellite (18) et/ou ledit premier palier (40).

9. Ensemble de transmission selon les revendications 1 ou 3, comprenant :
- un support fixe en rotation (230) ;
- une roue dentée (1800) pouvant tourner autour d'un troisième axe de rotation (M) par rapport audit support (230) ; et
- au moins un deuxième palier à roulement (1400, 1401) adapté pour soutenir, lors de l'utilisation, ladite roue dentée (1800) de manière rotative par rapport audit support (230) ;
dans lequel ledit réservoir (1500) est intégré dans ledit support (230) et/ou fixé à celui-ci.

10. Ensemble de transmission selon la revendication 9, dans lequel ledit deuxième palier (1400) comprend :
- une première bague (1410) définissant un premier chemin de roulement (1420) ;
- une deuxième bague (1430) définissant un deuxième chemin de roulement (1440) faisant face audit premier chemin de roulement (1420) ; et
- une pluralité de corps de roulement (1450) adaptés pour rouler, lors de l'utilisation, sur lesdits premier et deuxième chemins de roulement (1420, 1440) ;
dans lequel ledit élément fusible (1630) audit état solide est adapté pour coopérer avec ladite deuxième bague (1430).

11. Ensemble de transmission selon la revendication 9 ou 10, dans lequel
**caractérisé en ce que** ledit deuxième palier (1400) comprend une pluralité de premiers conduits (1700), qui s'étendent à travers ladite première bague (1410) et/ou ladite deuxième bague (1430) et sont adaptés pour être traversés, lors de l'utilisation, par ledit fluide lubrifiant ;
ledit support (230) comprenant des deuxièmes conduits (1701) adaptés pour relier fluidiquement ladite première ouverture (1550) à au moins certains desdits premiers conduits (1700).

12. Ensemble de transmission selon les revendications 1 à 3, dans lequel ledit organe à lubrifier (1801) pour la transmission du mouvement comprend une roue dentée (1801) ;
ladite roue dentée (1801) comprenant, à son tour :
- un quatrième corps principal (1804) ;
- une denture (1805) fixée ou intégrée audit quatrième corps principal (1804)
dans lequel ledit réservoir (2500) est intégré audit quatrième corps principal (1804) et dans lequel ledit élément fusible (2630) audit état solide est agencé, lors de l'utilisation, en butée contre ledit quatrième corps principal (1804).

13. Aéronef (1 ; 1‴‴ ; 1‴ʺʺ ; 1‴‴ʺ), en particulier aéronef apte à effectuer un vol stationnaire, comprenant un ensemble de transmission (3 ; 3‴ʺʺ ; 3ʺʺ‴ ; 3ʺʺʺʺ) selon l'une quelconque des revendications précédentes.
